(19) Europäisches Patentamt / European Patent Office / Office européen des brevets

(11) EP 4 458 885 A1

(12) EUROPEAN PATENT APPLICATION
published in accordance with Art. 153(4) EPC

(43) Date of publication:
06.11.2024 Bulletin 2024/45

(21) Application number: 23903654.4

(22) Date of filing: 17.07.2023

(51) International Patent Classification (IPC):
*C08J 3/24* (2006.01) *C08J 3/12* (2006.01)
*C08J 3/075* (2006.01) *C08F 4/40* (2006.01)
*C08F 20/06* (2006.01)

(52) Cooperative Patent Classification (CPC):
**C08F 4/40; C08F 20/06; C08J 3/075; C08J 3/12; C08J 3/24**

(86) International application number:
**PCT/KR2023/010216**

(87) International publication number:
**WO 2024/128449 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.12.2022 KR 20220177312**

(71) Applicant: **LG Chem, Ltd.**
**Yeongdeungpo-gu**
**Seoul 07336 (KR)**

(72) Inventors:
- **LEE, Seul Ah**
  **Daejeon 34122 (KR)**
- **PARK, Sung Soo**
  **Daejeon 34122 (KR)**
- **JU, Jin Hyuck**
  **Daejeon 34122 (KR)**
- **LEE, Junwye**
  **Daejeon 34122 (KR)**
- **AHN, Taebin**
  **Daejeon 34122 (KR)**
- **KIM, Tae Yun**
  **Daejeon 34122 (KR)**
- **PARK, Dong Hoon**
  **Daejeon 34122 (KR)**
- **SHIN, Kwangin**
  **Daejeon 34122 (KR)**
- **WOO, Heechang**
  **Daejeon 34122 (KR)**
- **BAEK, Seokhyeon**
  **Daejeon 34122 (KR)**
- **HAN, Sangwon**
  **Daejeon 34122 (KR)**
- **JEE, Min Goo**
  **Daejeon 34122 (KR)**

(74) Representative: **Plasseraud IP**
**104 Rue de Richelieu**
**CS92104**
**75080 Paris Cedex 02 (FR)**

# (54) METHOD FOR PREPARING SUPER ABSORBENT RESIN

(57) The present disclosure relates to a preparation method for a super absorbent polymer capable of improving the absorption rate and overall absorption properties of the super absorbent polymer and effectively reducing extractable components and residual monomers by introducing a radical reaction system in a pulverization process.



Processed by Luminess, 75001 PARIS (FR)

(Cont. next page)

【FIG. 1】

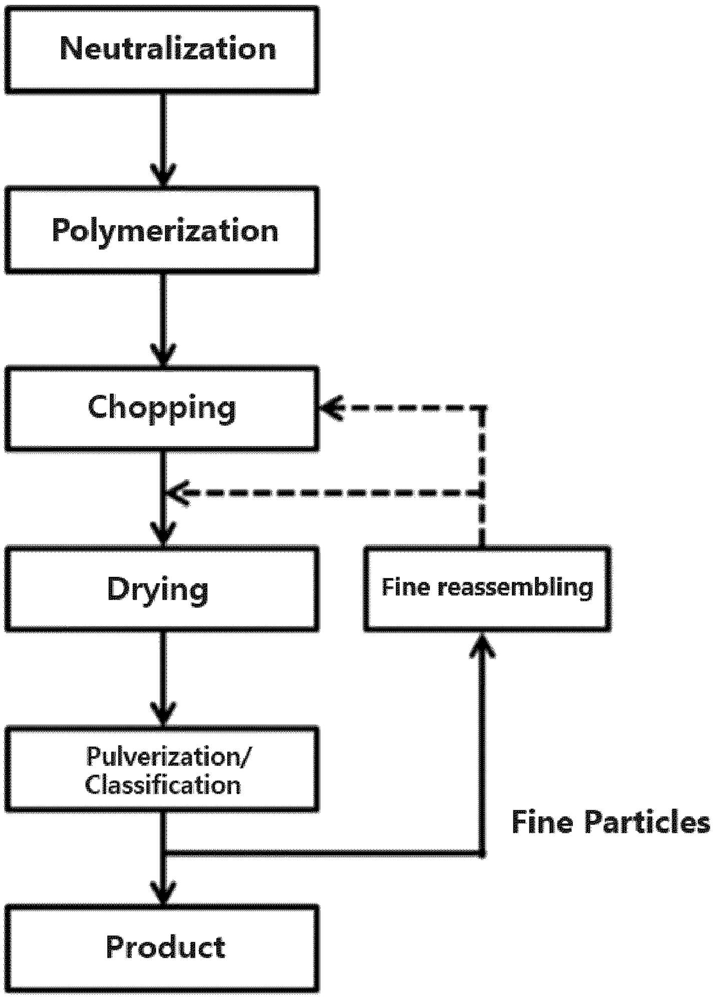
Neutralization
Polymerization
Chopping
Drying
Fine reassembling
Pulverization/
Classification
Fine Particles
Product

## Description

[TECHNICAL FIELD]

Cross-reference to Related Application

This application claims the benefits of Korean Patent Application No. 1 0-2022-0177312 filed on December 16, 2022 with the Korean Intellectual Property Office, the disclosure of which is incorporated herein by reference in its entirety.

The present disclosure relates to a preparation method for a super absorbent polymer. More specifically, it relates to a method for preparing a super absorbent polymer capable of improving the absorption rate and overall absorption properties of the super absorbent polymer by introducing a radical reaction system in a pulverization process.

[BACKGROUND OF ART]

A super absorbent polymer (SAP) is a type of synthetic polymeric material capable of absorbing 500 to 1000 times its own weight of moisture. Various manufacturers have denominated it with different names, such as SAM (Super Absorbency Material), AGM (Absorbent Gel Material), and the like. Such super absorbent polymers started to be practically applied in sanitary products, and they are now being widely used for water retaining soil products for gardening, water stop materials for the civil engineering and construction, sheets for raising seedling, fresh-keeping agents for food distribution fields, materials for poultices, or the like.

These super absorbent polymers have been widely used in the field of hygienic materials such as diapers or sanitary napkins. In such hygienic materials, the super absorbent polymer is generally contained in a state of being spread in the pulp. In recent years, however, continuous efforts have been made to provide hygienic materials such as diapers having a thinner thickness. As a part of such efforts, the development of so-called pulpless diapers and the like in which the pulp content is reduced or pulp is not used at all is being actively advanced.

In the case of the above-described hygienic materials in which the pulp content is reduced or pulp is not used, the super absorbent polymer is included in a relatively high ratio, so that the super absorbent polymer particles are inevitably included in multiple layers in the hygienic materials. In order for the entire super absorbent polymer particles included in multiple layers to more efficiently absorb a large amount of liquid such as urine, the super absorbent polymer basically needs to exhibit excellent absorption performance as well as a high absorption rate.

Meanwhile, such a super absorbent polymer is generally prepared by performing the step of polymerizing monomers to prepare a hydrogel polymer containing a large amount of moisture; and the step of coarsely pulverizing the hydrogel polymer, followed by drying, and then pulverizing the hydrogel polymer into polymer particles having a desired particle diameter. In particular, there has been a problem in that the pulverization is not easily performed because the coarsely pulverized hydrogel polymers aggregate or agglomerate with each other in the process of coarsely pulverizing the hydrogel polymer.

Accordingly, there is a need to develop a technology capable of improving the absorption rate of the super absorbent polymer and a technology capable of improving the pulverization processability during the pulverization process in addition to improving centrifugal retention capacity (CRC), which represents the basic absorption performance and water retention capacity of the super absorbent polymer, and absorption under pressure (AUP), which represents the property of retaining the absorbed liquid well even under external pressure.

In addition, there is a continuous demand for effectively reducing extractable components and residual monomers of the super absorbent polymer that adversely affect the feeling of use, absorption characteristics, and rewetting of absorbent products.

[DETAILED DESCRIPTION OF THE INVENTION]

[Technical Problem]

In the present disclosure, there is provided a preparation method for a super absorbent polymer capable of improving the absorption rate and overall absorption properties of the super absorbent polymer and effectively reducing extractable components and residual monomers by introducing a radical reaction system in a pulverization process.

[Technical Solution]

In order to achieve the above object, there is provided a preparation method for a super absorbent polymer including the steps of:

forming a hydrogel polymer by cross-linking polymerization of an acrylic acid-based monomer having an acidic group in the presence of an internal cross-linking agent, a polymerization initiator, a first oxidizing agent and a first reducing agent forming a redox couple with each other (step 1);
micronizing the hydrogel polymer in the presence of a neutralizing agent, a surfactant, a second oxidizing agent and a second reducing agent forming a redox couple with each other (step 2);
drying the micronized hydrogel polymer to prepare a base resin (step 3); and
forming a surface cross-linked layer on at least a part of a surface of the base resin (step 4).

[ADVANTAGEOUS EFFECTS]

According to the preparation method for a super absorbent polymer of the present disclosure, the absorption rate and overall absorption properties of the super absorbent polymer may be improved and extractable components and residual monomers may be effectively reduced by introducing a surfactant having a specific structure during the pulverization process of the hydrogel polymer and introducing a radical reaction system.

[BRIEF DESCRIPTION OF THE DRAWINGS]

FIG. 1 is a flowchart of a conventional preparation method for a super absorbent polymer.

[DETAILED DESCRIPTION OF THE EMBODIMENTS]

The terminology used herein is for the purpose of describing particular embodiments only and is not intended to limit the invention. The singular forms are intended to include the plural forms as well, unless the context clearly indicates otherwise. It will be further understood that the terms "include", "have", or "possess" when used in this specification, specify the presence of stated features, steps, components, or combinations thereof, but do not preclude the presence or addition of one or more other features, steps, components, or combinations thereof.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

The terminology used herein is only intended to refer to specific embodiments and is not intended to limit the present invention. Further, as used herein, the singular forms also include the plural forms unless the phrases clearly indicate the opposite.

The terminology "polymer" in the present disclosure is in a state in which an acrylic acid-based monomer is polymerized, and may include all moisture content ranges, or all particle diameter ranges. Among the polymers, a polymer having a moisture content of about 40 wt% or more after polymerization and before drying may be referred to as a hydrogel polymer, and particles in which the hydrogel polymer is pulverized and dried may be referred to as a cross-linked polymer.

In addition, the terminology "super absorbent polymer" is used to encompass all of a cross-linked polymer in which an acrylic acid-based monomer is polymerized or a base resin in the form of powder consisting of super absorbent polymer particles in which the cross-linked polymer is pulverized, and the cross-linked polymer or the base resin further processed, for example, surface cross-linking, fine reassembling, drying, pulverization, classification, etc., to be in a state suitable for commercialization, depending on the context. Accordingly, the terminology "super absorbent polymer composition" may be interpreted as a composition including a super absorbent polymer, that is, a plurality of super absorbent polymer particles.

In addition, the terminology "fine powder" refers to particles having a particle diameter of less than 150 μm among the super absorbent polymer particles. The particle diameter of these polymer particles may be measured according to EDANA (European Disposables and Nonwovens Association) WSP 220.3.

In addition, the terminology "chopping" refers to cutting the hydrogel polymer into small pieces of millimeters in order to increase drying efficiency, and is used separately from pulverization to a level of micrometers or normal particles.

In addition, the terminology "micronizing (micronization)" refers to pulverizing the hydrogel polymer to a particle diameter of several tens to hundreds of micrometers, and is used separately from "chopping".

Hereinafter, the preparation method for a super absorbent polymer of the present disclosure will be described in more detail.

Meanwhile, super absorbent polymers are conventionally prepared by performing cross-linking polymerization on an acrylic acid-based monomer having at least partially neutralized acidic groups in the presence of an internal cross-linking agent and a polymerization initiator to form a hydrogel polymer, and then drying the formed hydrogel polymer,

followed by pulverization to a desired particle size. At this time, a chopping process of cutting the hydrogel polymer into particles of several millimeters is usually performed before the drying process to facilitate drying of the hydrogel polymer and increase the efficiency of the pulverization process. However, due to the stickiness of the hydrogel polymer in this chopping process, the hydrogel polymer cannot be pulverized to micro-sized particles and becomes an aggregated gel. When the hydrogel polymer in the form of an aggregated gel is dried, a plate-shaped dried product is formed. In order to pulverize it to micro-sized particles, a multi-stage pulverization process is required, so there has been a problem in that many fine particles are generated in this process.

Specifically, FIG. 1 is a flowchart of a conventional method for preparing a super absorbent polymer. Referring to FIG. 1, the super absorbent polymer has conventionally been prepared by including the following steps.

(Neutralization) neutralizing at least some of acidic groups of the acrylic acid-based monomer;
(Polymerization) forming a hydrogel polymer by cross-linking polymerization of an acrylic acid-based monomer having at least partially neutralized acidic groups in the presence of an internal cross-linking agent and a polymerization initiator;
(Chopping) chopping the hydrogel polymer;
(Drying) drying the chopped hydrogel polymer; and
(Pulverization/classification) pulverizing the dried polymer and then classifying it into normal particles and fine powder;

As described above, the chopped hydrogel polymer has an aggregated gel shape with a size of about 1 cm to 10 cm. Such a chopped hydrogel polymer is laminated on a belt whose bottom is made of a perforated plate, and dried by hot air supplied from the bottom or top. Since the polymer dried by the above drying method has a plate shape rather than a particle shape, the classification step after pulverization has been performed by coarse pulverization, then classification, followed by fine pulverization again, then classification so that the particles to be prepared become normal particles, that is, particles having a particle diameter of 150 μm to 850 μm. Since the amount of the fine powder separated in the final classification step is about 10 wt% to about 20 wt% based on the total weight of the final super absorbent polymer, the separated fine powder was mixed with an appropriate amount of water, reassembled, and then reused by putting it in the chopping step or in the step before drying.

However, problems such as causing an increase in equipment load and/or energy consumption have occurred when a fine reassembly mixed with water is reinjected into the pulverization or drying process for reuse of the fine powder, and the remaining fine powder that has not been classified caused deterioration of physical properties of the super absorbent polymer.

Accordingly, the present inventors have found that the amount of fine powder generated in the conventional preparation method is greatly affected by a pulverization process. In addition, it has been confirmed that the amount of fine powder generated in the preparation process can be significantly reduced by adding a surfactant in the pulverization process to pulverize more finely while controlling aggregation, and thus particles in which fine particles are aggregated can be prepared.

Meanwhile, when a surfactant is added to the neutralized hydrogel polymer, the surfactant penetrates the inside of the hydrogel polymer rather than existing at the interface of the hydrogel polymer due to the high water retention capacity of the neutralized hydrogel polymer. Therefore, there is a problem in that the surfactant does not properly perform its role.

As a result of repeated research to solve this problem, it was confirmed that when polymerization is first performed in a state where the acidic groups are not neutralized to form a polymer, the hydrogel polymer is pulverized in the presence of a surfactant, and then the acidic groups of the polymer are neutralized; when the acidic groups of the polymer are neutralized to form a hydrogel polymer, and then the hydrogel polymer is pulverized in the presence of a surfactant; or when the acidic groups present in the polymer are neutralized at the same time as pulverization, unlike the conventional preparation method for a super absorbent polymer in which polymerization was not performed in a state where the acidic groups of the acrylic acid-based monomer was neutralized, a large amount of surfactant is present on the surface of the polymer, and it can sufficiently play the role of lowering the high adhesiveness of the polymer, preventing excessive agglomeration of the polymer, and controlling the state of agglomeration to a desired level.

Accordingly, the amount of fine powder generated during the process can be significantly reduced by making the polymer into secondary particles in which primary particles are aggregated, and then performing the pulverization and drying processes under milder conditions.

In addition, when the polymer is pulverized in the presence of a surfactant, hydrophobicity is imparted to the surface of the pulverized super absorbent polymer particles by a hydrophobic functional group included in the surfactant, thereby reducing the frictional force between the particles and increasing the bulk density of the super absorbent polymer. Further, a hydrophilic functional group included in the surfactant may also be bonded to the super absorbent polymer particles so that the surface tension of the polymer may not be lowered. Accordingly, the super absorbent polymer

prepared according to the above-described method may have a high bulk density while exhibiting similar surface tension compared with a polymer without using a surfactant.

In addition, when polymerization is first performed in an unneutralized state to form a polymer, and then acidic groups present in the polymer are neutralized, a longer chain polymer can be formed and cross-linking is incomplete, so that it is possible to reduce the content of extractable components present in a non-crosslinked state.

The extractable component has a property of being easily eluted when the super absorbent polymer comes into contact with a liquid. When the content of the extractable components is high, most of the eluted extractable components remain on the surface of the super absorbent polymer and make the super absorbent polymer sticky, thereby reducing permeability. Therefore, it is important to keep the content of extractable components low in terms of permeability.

Therefore, as an oxidizing agent and a reducing agent forming a redox couple with each other by a radical reaction system are introduced in the step of pulverizing the polymer, radicals are generated by the redox reaction, and the remaining monomers that are not polymerized by the generated radicals are additionally polymerized by the polymerization reaction, so that the residual monomers and extractable components can be simultaneously reduced.

In summary, the present inventors have confirmed that when forming a polymer by first performing polymerization in a state where the acidic group is not neutralized, and then performing pulverization after mixing with a surfactant, the aggregation of the pulverized hydrogel polymer particles is suppressed, so that the pulverization processability is improved and the amount of fine powder generated is remarkably reduced. Further, they have confirmed that the residual monomers and extractable components can be simultaneously reduced by introducing a radical reaction system in the pulverization process, thereby completing the present invention.

Accordingly, the super absorbent polymer prepared according to the above preparation method is characterized in that it exhibits improved absorption rate, water absorption properties, and reduced contents of residual monomers and extractable components compared to the super absorbent polymer prepared according to the conventional preparation method.

Accordingly, the preparation method for a super absorbent polymer according to one embodiment of the present disclosure is characterized in that it includes the steps of:

forming a hydrogel polymer by cross-linking polymerization of an acrylic acid-based monomer having an acidic group in the presence of an internal cross-linking agent, a polymerization initiator, a first oxidizing agent and a first reducing agent forming a redox couple with each other (step 1);
micronizing the hydrogel polymer in the presence of a neutralizing agent, a surfactant, a second oxidizing agent and a second reducing agent forming a redox couple with each other (step 2);
drying the micronized hydrogel polymer to prepare a base resin (step 3); and
forming a surface cross-linked layer on at least a part of the surface of the base resin (step 4).

Hereinafter, each step of the preparation method for a super absorbent polymer according to one embodiment of the present disclosure will be described in more detail.

**(Step** 1)

In the preparation method for a super absorbent polymer according to one embodiment, a hydrogel polymer is obtained by cross-linking polymerization of an acrylic acid-based monomer having an acidic group in the presence of an internal cross-linking agent, a polymerization initiator, a first oxidizing agent and a first reducing agent forming a redox couple with each other.

The internal cross-linking agent, the polymerization initiator, the first oxidizing agent and the first reducing agent forming a redox couple with each other, and the acrylic acid-based monomer having an acidic group may be dissolved in a solvent, and then polymerized in the form of a composition.

The acrylic acid-based monomer is a compound represented by the following Chemical Formula 1:

[Chemical Formula1] R-COOM

in Chemical Formula 1,

R is a C2 to C5 alkyl group having an unsaturated bond, and
M is a hydrogen atom, a monovalent or divalent metal, an ammonium group, or an organic amine salt.

Preferably, the acrylic acid-based monomer may include at least one selected from the group consisting of acrylic acid, methacrylic acid, and a monovalent metal salt, a divalent metal salt, an ammonium salt and an organic amine salt thereof.

Herein, the acrylic acid-based monomer has acidic groups, and at least some of the acidic groups are neutralized by a neutralizing agent in step 2 to be described later. In this case, a basic material such as sodium hydroxide, potassium hydroxide, or ammonium hydroxide capable of neutralizing an acidic group may be used as the neutralizing agent, which will be described in more detail in the preparation method to be described later.

As described above, in the conventional preparation method for a super absorbent polymer, a hydrogel polymer was formed by cross-linking polymerization of a monomer in which at least some of the acidic groups are neutralized by a neutralizing agent. Specifically, in the step of mixing the acrylic acid-based monomer having acidic groups, the internal cross-linking agent, the polymerization initiator, and the neutralizing agent, at least some of the acidic groups of the acrylic acid-based monomer were neutralized.

However, according to one embodiment of the present disclosure, polymerization is first performed in a state where acidic groups of the acrylic acid-based monomers are not neutralized to form a polymer.

Acrylic acid-based monomers (e.g., acrylic acid) in a state where acidic groups are not neutralized are in a liquid state at room temperature, and have high miscibility with a solvent (water), and thus exist in the monomer composition in the form of a mixed solution. However, acrylic acid-based monomers in which the acidic groups are neutralized are in a solid state at room temperature, have different solubility depending on the temperature of the solvent (water), and has lower solubility at a lower temperature.

The acrylic acid-based monomers in which acidic groups are not neutralized have higher solubility or miscibility with a solvent (water) than monomers in which acidic groups are neutralized, so that they do not precipitate even at low temperatures, and thus are advantageous for long-term polymerization at low temperatures. Accordingly, it is possible to stably form a polymer having a higher molecular weight and a uniform molecular weight distribution by performing polymerization for a long time using the acrylic acid-based monomer in which acidic groups are not neutralized.

In addition, it is possible to form a long chain polymer, thereby achieving an effect of reducing the content of extractable components present in a non-crosslinked state due to incomplete polymerization or cross-linking.

In addition, when polymerization is first performed in a state where the acidic groups of the monomer are not neutralized to form a polymer, and then micronization is performed in the presence of a surfactant after neutralization; when neutralization is performed after micronization in the presence of a surfactant; or when the acidic groups present in the polymer are neutralized at the same time as micronization, a large amount of surfactant may be present on the surface of the polymer to sufficiently play a role of lowering the adhesiveness of the polymer.

The concentration of the acrylic acid-based monomer may be about 20 to 60 wt%, or about 20 to 40 wt% in consideration of polymerization time and reaction conditions.

The monomer composition according to one embodiment of the present disclosure includes an internal cross-linking agent. The internal cross-linking agent is used for cross-linking the inside of the polymer in which the acrylic acid monomer is polymerized, and is distinguished from a surface cross-linking agent for cross-linking the surface of the polymer.

As the internal cross-linking agent, any compound can be used as long as it enables the introduction of cross-linking during polymerization of the acrylic acid monomer. Non-limiting examples of the internal cross-linking agent may include multifunctional cross-linking agents, such as N,N'-methylenebisacrylamide, trimethylolpropane tri(meth)acrylate, ethylene glycol di(meth)acrylate, polyethylene glycol (meth)acrylate, polyethylene glycol di(meth)acrylate, propylene glycol di(meth)acrylate, polypropylene glycol(meth)acrylate, butanediol di(meth)acrylate, butylene glycol di(meth)acrylate, diethylene glycol di(meth)acrylate, hexanediol di(meth)acrylate, triethylene glycol di(meth)acrylate, tripropylene glycol di(meth)acrylate, tetraethylene glycol di(meth)acrylate, dipentaerythritol pentaacrylate, glycerin tri(meth)acrylate, pentaerythritol tetraacrylate, triarylamine, pentaerythritol triallyl ether, ethylene glycol diglycidyl ether, propylene glycol, glycerin, or ethylene carbonate, which can be used alone or in combination of two or more thereof, but are not limited thereto. Preferably, pentaerythritol triallyl ether may be used.

The internal cross-linking agent may be used in an amount of 0.01 to 5 parts by weight based on 100 parts by weight of the acrylic acid-based monomer. For example, the internal cross-linking agent may be used in an amount of 0.01 parts by weight or more, 0.05 parts by weight or more, or 0.1 parts by weight or more, and 5 parts by weight or less, 3 parts by weight or less, 2 parts by weight or less, 1 parts by weight or less, or 0.7 parts by weight or less. When the content of the internal cross-linking agent is too low, cross-linking does not occur sufficiently, making it difficult to realize a strength above an appropriate level. When the content of the internal cross-linking agent is too high, the internal cross-linking density increases, making it difficult to realize a desired water retention capacity.

Further, the polymerization initiator may be appropriately selected depending on the polymerization method. In the case of a thermal polymerization method, a thermal polymerization initiator is used, in the case of a photopolymerization method, a photopolymerization initiator is used, and in the case of a hybrid polymerization method (a method using both heat and light), both a thermal polymerization initiator and a photopolymerization initiator can be used. However, even in the case of performing the photopolymerization method, a certain amount of heat is generated by light irradiation such as ultraviolet irradiation. Further, a certain amount of heat may be generated with the progress of the polymerization reaction, which is an exothermic reaction, a thermal polymerization initiator can be further used.

As the photopolymerization initiator, a compound capable of forming radicals by a light such as UV can be used without limitations in the constitution.

For example, the photopolymerization initiator may be one or more compounds selected from the group consisting of benzoin ether, dialkyl acetophenone, hydroxyl alkylketone, phenyl glyoxylate, benzyl dimethyl ketal, acyl phosphine, and α-aminoketone. Meanwhile, specific examples of the acyl phosphine include diphenyl(2,4,6-trimethylbenzoyl)phosphine oxide, phenylbis(2,4,6-trimethylbenzoyl)phosphine oxide, ethyl(2,4,6-trimethylbenzoyl)phenylphosphinate, and the like. More various photopolymerization initiators are well disclosed in "UV Coatings: Basics, Recent Developments and New Application (Elsevier, 2007)" written by Reinhold Schwalm, p 115, and the present disclosure is not limited thereto.

In addition, one or more initiators selected from the group consisting of a persulfate-based initiator, an azo-based initiator, hydrogen peroxide, and ascorbic acid may be used as the thermal polymerization initiator. Specifically, sodium persulfate ($Na_2S_2O_8$), potassium persulfate ($K_2S_2O_8$), ammonium persulfate ($(NH_4)_2S_2O_8$), and the like may be used as examples of the persulfate-based initiators; and 2,2-azobis(2-amidinopropane) dihydrochloride, 2,2-azobis-(N,N-dimethylene)isobutyramidine dihydrochloride, 2-(carbamoylazo)isobutylonitril, 2,2-azobis[2-(2-imidazolin-2-yl)propane] dihydrochloride, 4,4-azobis-(4-cyanovaleric acid), and the like may be used as examples of the azo-based initiators. More various thermal polymerization initiators are well disclosed in 'Principle of Polymerization (Wiley, 1981)' written by Odian, p 203, and the present disclosure is not limited thereto.

The polymerization initiator may be used in an amount of 0.1 to 2 parts by weight based on 100 parts by weight of the acrylic acid-based monomer for proper polymerization rate and degree of polymerization, but the present disclosure is not limited thereto.

The monomer composition may further include additives such as a thickener, a plasticizer, a storage stabilizer, and an antioxidant, if necessary.

Further, the monomer composition may be, for example, in the form of a solution dissolved in a solvent such as water, and the solid content in the monomer composition in the form of a solution, that is, the concentration of the monomer, internal cross-linking agent, and polymerization initiator can be appropriately adjusted in consideration of the polymerization time and reaction conditions. For example, the solid content in the monomer composition may be 10 to 80 wt%, 15 to 60 wt%, or 30 to 50 wt%, but the present disclosure is not limited thereto.

At this time, any solvent which can dissolve the above components may be used without limitation. For example, the solvent may be in combination of at least one selected from water, ethanol, ethyleneglycol, diethyleneglycol, triethyleneglycol, 1,4-butanediol, propyleneglycol, ethyleneglycol monobutylether, propyleneglycol monomethylether, propyleneglycol monomethylether acetate, methylethylketone, acetone, methylamylketone, cyclohexanone, cyclopentanone, diethyleneglycol monomethylether, diethyleneglycol ethylether, toluene, xylene, butyrolactone, carbitol, methylcellosolve acetate, and N,N-dimethylacetamide.

According to one embodiment of the present disclosure, the step of forming a polymer by performing polymerization on the monomer composition may be performed in a batch type reactor, but is not limited thereto.

In the conventional method for preparing a super absorbent polymer composition, the polymerization method is largely divided into the thermal polymerization and the photopolymerization according to an energy source of the polymerization. In the case of thermal polymerization, it is generally carried out in a reactor equipped with an agitation spindle, such as a kneader. In the case of photopolymerization, it may be carried out in a reactor equipped with a movable conveyor belt or in a container with a flat bottom.

Meanwhile, in the above polymerization method, a polymer having a molecular weight which is not high and a wide molecular weight distribution is formed according to a relatively short polymerization time (e.g., 1 hour or less).

Meanwhile, when photopolymerization is performed in the reactor equipped with a movable conveyor belt or in a container with a flat bottom, a hydrogel polymer in the form of a sheet having a belt width may usually be obtained. At this time, a thickness of the polymer sheet may vary depending on the concentration and injection rate or amount of the monomer composition to be injected, and it may be about 0.5 to about 5 cm.

When the monomer composition is supplied to such an extent that the thickness of the polymer sheet is too thin, the production efficiency may be low, which is undesirable. When the thickness of the polymer on the sheet is excessively increased for productivity, the polymerization reaction does not occur evenly over the entire thickness, making it difficult to form a high-quality polymer.

In addition, the polymerization in the reactor equipped with a conveyor belt and an agitation spindle is performed in a continuous manner by supplying a new monomer composition to the reactor while the polymerization product is moving. Therefore, polymers having different degrees of polymerization are mixed, and accordingly, it is difficult to achieve uniform polymerization throughout the monomer composition, and overall physical properties may be deteriorated.

However, according to one embodiment of the present disclosure, as the polymerization proceeds in a fixed-bed type in a batch reactor, there is little risk of mixing polymers having different degrees of polymerization, and accordingly, polymers having uniform quality can be obtained.

In addition, the polymerization step is performed in a batch-type reactor having a predetermined volume, and the polymerization reaction is performed for a longer period of time, for example, 3 hours or more, than polymerization in a continuous manner in a reactor equipped with a conveyor belt. Despite the long polymerization time as described above, monomers are not easily precipitated because the polymerization is performed on unneutralized acrylic acid-based monomers. Therefore, it is advantageous to perform polymerization for a long time.

Meanwhile, in one embodiment of the present disclosure, polymerization may be initiated by adding a first oxidizing agent and a first reducing agent forming a redox couple with each other together with the polymerization initiator.

Specifically, when the first oxidizing agent and the first reducing agent are added to the monomer composition, they react with each other to form radicals.

Since the formed radicals react with the monomer, and the oxidation-reduction reaction between the first oxidizing agent and the first reduction is very reactive, polymerization is initiated even when only a small amount of polymerization initiator is added, so there is no need to increase the process temperature. Therefore, low-temperature polymerization is possible, and changes in physical properties of the polymer composition can be minimized.

In one embodiment of the present disclosure, when a persulfate-based oxidizing agent is used as the first oxidizing agent, the first reducing agent may be at least one selected from the group consisting of sodium metabisulfite ($Na_2S_2O_5$), tetramethyl ethylenediamine (TMEDA), iron sulfate (II), sodium formaldehyde sulfoxylate, and disodium 2-hydroxy-2-sulfinoacteate.

In one example, potassium persulfate is used as the first oxidizing agent and disodium 2-hydroxy-2-sulfinoacetate is used as the first reducing agent; ammonium persulfate is used as the first oxidizing agent and tetramethylethylenediamine is used as the first reducing agent; or sodium persulfate is used as the first oxidizing agent and sodium formaldehyde sulfoxylate is used as the first reducing agent.

In another embodiment of the present disclosure, when a hydrogen peroxide-based oxidizing agent is used as the first oxidizing agent, the first reducing agent may be at least one selected from the group consisting of ascorbic acid, sucrose, sodium sulfite ($Na_2SO_3$), sodium metabisulfite ($Na_2S_2O_5$), tetramethyl ethylenediamine (TMEDA), iron sulfate (II), sodium formaldehyde sulfoxylate, disodium 2-hydroxy-2-sulfinoacteate and disodium 2-hydroxy-2-sulfinoacteate.

For example, hydrogen peroxide may be used as the first oxidizing agent, and ascorbic acid or iron sulfate (II) may be used as the first reducing agent. Meanwhile, the hydrogen peroxide and ascorbic acid may also act as thermal polymerization initiators.

As the polymer obtained in this way is polymerized using an unneutralized acrylic acid-based monomer, a polymer having a high molecular weight and a uniform molecular weight distribution can be formed, and the content of extractable components can be reduced.

The polymer obtained in this way is a hydrogel polymer and may have a moisture content of 30 to 80 wt%. For example, the moisture content of the polymer may be 30 wt% or more, 45 wt% or more, or 50 wt% or more, and 80 wt% or less, 70 wt% or less, or 60 wt% or less.

When the moisture content of the polymer is too low, it may not be effectively pulverized because it is difficult to secure an appropriate surface area in the subsequent pulverization step. When the moisture content of the polymer is too high, it may be difficult to pulverize the polymer to a desired particle size due to increased pressure applied in the subsequent pulverization step.

At this time, "moisture content" in the present disclosure is the content of moisture in the entire weight of the polymer, and it means a value of which the weight of the dried polymer is subtracted from the weight of the polymer. Specifically, the moisture content is defined as a value calculated by measuring the weight loss due to moisture evaporation from the polymer in the process of increasing the temperature of the polymer in a crumb state and drying the same through infrared heating. At this time, the drying condition for measuring the moisture content is as follows: the temperature is increased to about 180 °C and maintained at 180 °C, and the total drying time is 20 minutes including 5 minutes of a heating step.

**(Step 2)**

Subsequently, a step of micronizing the hydrogel polymer in the presence of a neutralizing agent, a surfactant, a second oxidizing agent and a second reducing agent forming a redox couple with each other is performed.

The step 2 is a step of micronizing the hydrogel polymer in the presence of a surfactant, and is a step in which the hydrogel polymer is not chopped to millimeters, but simultaneously cut to tens to hundreds of micrometers and agglomerated. That is, this is a step of preparing secondary agglomerated particles in which primary particles cut into tens to hundreds of micrometers are agglomerated by imparting appropriate adhesiveness to the hydrogel polymer. The base resin, which is a secondary agglomerated particle prepared in this step, has a normal particle size distribution and greatly increased surface area, so that the absorption rate can be remarkably improved.

As described above, after mixing the hydrogel polymer and the surfactant, the hydrogel polymer is micronized in the presence of the surfactant, so that a base resin in the form of secondary agglomerated particles in which the super

absorbent polymer particles and the surfactant are mixed, and then cut and agglomerated may be prepared.

Herein, the "base resin" refers to particles having a moisture content of about 30 wt% or more, and is prepared by cutting the polymer into particles, followed by agglomeration without a drying process. Accordingly, it may have a moisture content of 30 to 80 wt%, preferably 70 to 80 wt% similarly to the polymer.

First, as the neutralizing agent used in step 2, an aqueous solution of a basic material such as sodium hydroxide, potassium hydroxide, or ammonium hydroxide capable of neutralizing the acidic group may be used.

In addition, the degree of neutralization, which refers to the degree of neutralization by the neutralizing agent among the acidic groups included in the polymer, may preferably be 50 to 90 mol%, 60 to 85 mol%, 65 to 85 mol%, or 65 to 75 mol%. A range of the degree of neutralization may vary depending on the final physical properties. When the degree of neutralization is excessively high, the absorbency of the super absorbent polymer may decrease, and the concentration of carboxyl groups on the surface of the particles is too low, making it difficult to properly perform surface cross-linking in a subsequent process, resulting in reduced absorbency under pressure or liquid permeability. On the contrary, an excessively low degree of neutralization not only deteriorates absorbency of the polymer, but also gives the polymer hard-to-handle properties, such as those of an elastic rubber.

The surfactant used in step 2 may be a compound represented by the following Chemical Formula 2:

[Chemical Formula 2]

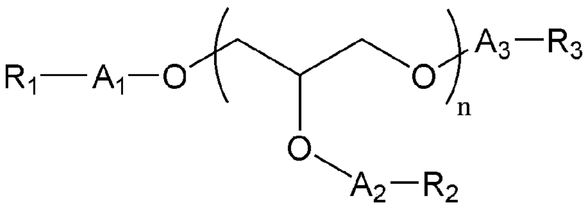

in Chemical Formula 2,

$A_1$, $A_2$ and As are each independently a single bond, carbonyl,

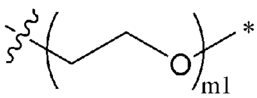, 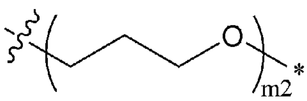, or 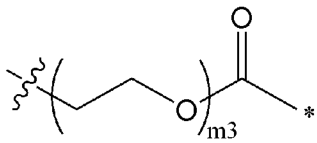,

provided that at least one of these is carbonyl, or

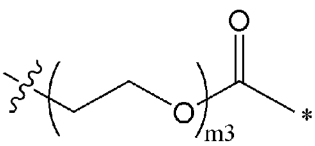,

wherein m1, m2 and m3 are each independently an integer of 1 to 8, each

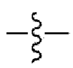

is connected to an adjacent oxygen atom, and



is connected to adjacent $R_1$, $R_2$ and $R_3$, respectively,

$R_1$, $R_2$ and $R_3$ are each independently hydrogen, C6 to C18 linear or branched alkyl or C6 to C18 linear or branched alkenyl, and
n is an integer of 1 to 9.

The surfactant represented by the Chemical Formula 2 is a nonionic surfactant and has excellent surface adsorption performance by hydrogen bonding even with an unneutralized polymer, and thus is suitable for realizing a desired agglomeration control effect. On the other hand, in the case of an anionic surfactant other than the nonionic surfactant, when mixed with a polymer neutralized with a neutralizing agent such as NaOH or $Na_2SO_4$, it is adsorbed via the Na+ ion ionized at the carboxyl substituent of the polymer. When mixed with an unneutralized polymer, there is a problem in that adsorption efficiency for the polymer is relatively lowered due to competition with the anion of the carboxyl substituent of the polymer.

Specifically, in the surfactant represented by the Chemical Formula 2, the hydrophobic functional group is the terminal functional group of $R_1$, $R_2$, and $R_3$ (if not hydrogen), and the hydrophilic functional group includes the glycerol-derived part in the chain and the terminal hydroxyl group (when $A_n$ is a single bond and $R_n$ is hydrogen, n=1~3). Herein, the glycerol-derived part and the terminal hydroxyl group are hydrophilic functional groups and serve to improve adsorption performance to the polymer surface. Accordingly, agglomeration of the super absorbent polymer particles can be effectively suppressed.

In Chemical Formula 2, the hydrophobic functional groups of $R_1$, $R_2$, and $R_3$ (if not hydrogen) are each independently C6 to C18 linear or branched alkyl or C6 to C18 linear or branched alkenyl. At this time, when $R_1$, $R_2$, and $R_3$ (if not hydrogen) are alkyl or alkenyl having less than 6 carbon atoms, there is a problem in that the chain length is too short to effectively control the agglomeration of the pulverized particles. When $R_1$, $R_2$, and $R_3$ (if not hydrogen) are alkyl or alkenyl having more than 18 carbon atoms, there may be problems in that the surfactant has reduced mobility and may not be effectively mixed with the polymer, and the unit price of the composition increases due to the increase in cost of the surfactant.

Preferably, $R_1$, $R_2$, and $R_3$ are hydrogen, C6 to C18 linear or branched alkyl such as 2-methylhexyl, n-heptyl, 2-methylheptyl, n-octyl, n-nonyl, n-decanyl, n-undecanyl, n-dodecanyl, n-tridecanyl, n-tetradecanyl, n-pentadecanyl, n-hexadecanyl, n-heptadecanyl, or n-octadecanyl, or C6 to C18 linear or branched alkenyl such as 2-hexenyl, 2-heptenyl, 2-octenyl, 2-nonenyl, n-decenyl, 2-undecenyl, 2-dodekenyl, 2-tridekenyl, 2-tetradekenyl, 2-pentadekenyl, 2-hexadekenyl, 2-heptadekenyl, or 2-octadekenyl.

The compound represented by the Chemical Formula 2 may be selected from compounds represented by the following Chemical Formulae 2-1 to 2-14:

[Chemical Formula 2-1]

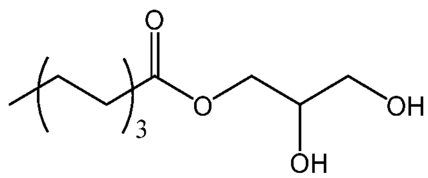

[Chemical Formula 2-2]

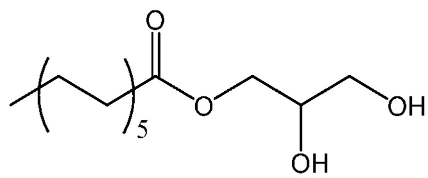

[Chemical Formula 2-3]

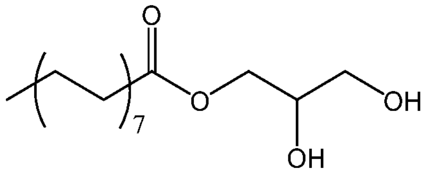

[Chemical Formula 2-4]

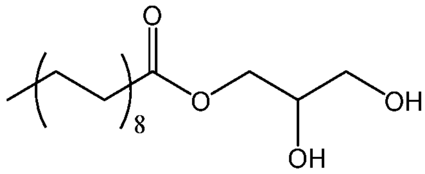

[Chemical Formula 2-5]

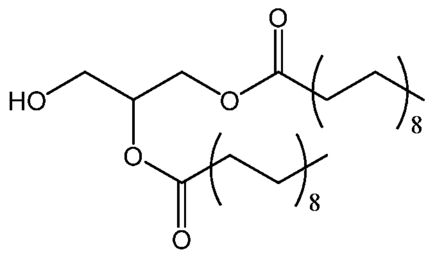

[Chemical Formula 2-6]

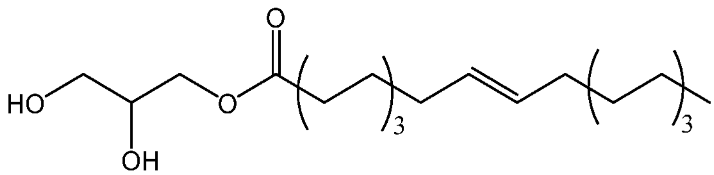

[Chemical Formula 2-7]

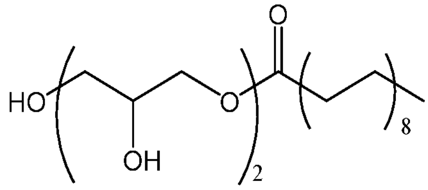

[Chemical Formula 2-8]

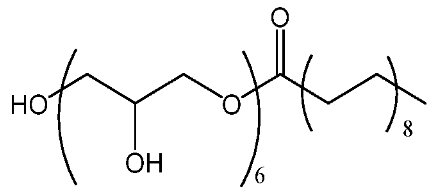

[Chemical Formula 2-9]

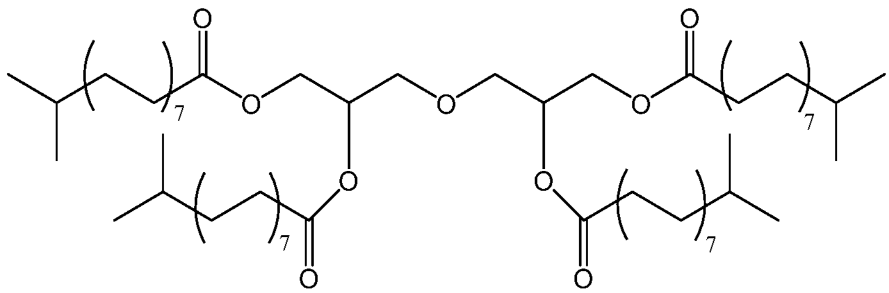

[Chemical Formula 2-10]

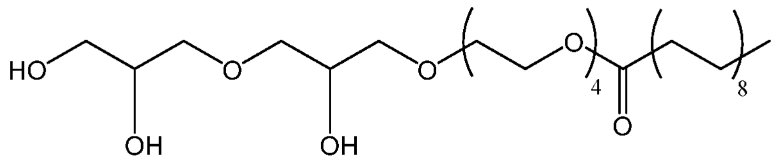

[Chemical Formula 2-11]

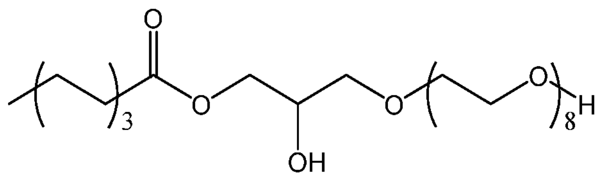

[Chemical Formula 2-12]

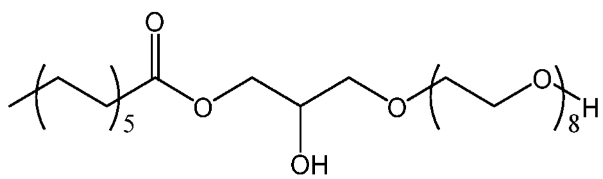

[Chemical Formula 2-13]

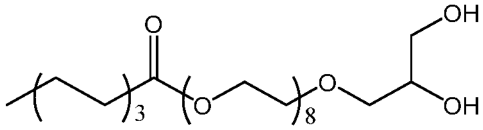

[Chemical Formula 2-14]

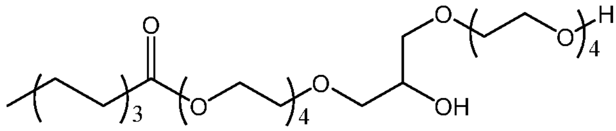

.

The surfactant may be included in an amount of 0.01 to 10 parts by weight based on 100 parts by weight of the acrylic acid monomer. When the total content of the surfactant relative to the acrylic acid-based monomer is too low, the agglomeration control effect by the surfactant is insignificant, and thus super absorbent polymer particles that are not pulverized to a desired particle diameter may be included. When the total content of the surfactant is too high, the balance between water retention capacity and absorbency under pressure, which are general physical properties of the super absorbent polymer, may deteriorate.

The content of the surfactant in the super absorbent polymer composition can be measured by including the steps of: adding 1 g of the super absorbent polymer composition to 1 ml of distilled water, followed by mixing sufficiently for 1 hour until swelling; filtering it to extract only a solution portion; and performing HPLC analysis to analyze the content of the surfactant dissolved in the solution portion.

More specifically, the surfactant may be included in an amount of 0.01 parts by weight or more, 0.02 parts by weight or more, 0.05 parts by weight or more, 0.1 parts by weight or more, or 0.5 parts by weight or more, and 10 parts by weight or less, 8 parts by weight or less, 5 parts by weight or less, 3 parts by weight or less, or 2 parts by weight or less based on 100 parts by weight of the acrylic acid-based monomer.

Meanwhile, at least some of the surfactant may be present on a surface of the super absorbent polymer particles. Herein, "at least some of the surfactant is present on a surface of the super absorbent polymer particles" means that at least some of the surfactant is adsorbed or bonded on the surface of the super absorbent polymer particles. Specifically, the surfactant may be physically or chemically adsorbed on the surface of the super absorbent polymer. More specifically, the hydrophilic functional group of the surfactant may be physically adsorbed on the hydrophilic moiety of the surface of the super absorbent polymer by an intermolecular force such as dipole-dipole interaction. In this way, each hydrophilic moiety of the surfactant is physically adsorbed on the surface of the super absorbent polymer particles to surround the surface, and each hydrophobic moiety of the surfactant is not adsorbed on the surface of the polymer particles, so each surfactant may be coated on the surface of the polymer particles in the form of a micelle structure.

When at least some of the surfactant is present on a surface of the super absorbent polymer particles, agglomeration between pulverized particles in the preparation of the super absorbent polymer may be more effectively suppressed, compared to the case where all of the surfactant of the Chemical Formula 2 is present inside the super absorbent polymer particles, specifically, inside the cross-linked polymer.

This is because the surfactant of Chemical Formula 2 is not added during the polymerization process of the acrylic acid-based monomer, but is added during the micronization step after polymer formation. Therefore, it can sufficiently perform the role of a surfactant compared to the case where the surfactant of Chemical Formula 2 is added during the polymerization process and the surfactant of Chemical Formula 2 is present inside the polymer, and pulverization and agglomeration occur simultaneously to obtain particles with a large surface area in the form of agglomerated fine particles.

Meanwhile, the super absorbent polymer of the embodiment may not include a compound having a glucose unit containing a plurality of hydroxyl groups in the molecule such as microcrystalline cellulose. For example, when the super absorbent polymer includes microcrystalline cellulose having an average particle diameter of 1 to 10 μ m such as AVICEL® PH-101 represented by the following Chemical Formula 3 available from FMC, agglomeration between super absorbent polymer particles may not be suppressed due to the plurality of hydroxyl groups, and thus the effect by the above-described surfactant may not be effectively expressed.

[Chemical Formula 3]

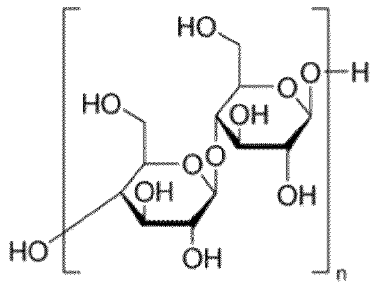

In addition, the super absorbent polymer of the embodiment may not include a hydrophilic additive such as polyethylene glycol, polypropylene glycol, polyethylene glycol)-poly(propylene glycol) copolymer, polyoxyethylene lauryl ether carboxylic acid, sodium polyoxyethylene lauryl ether carboxylate, lauryl sulfate, sodium lauryl sulfate, and the like. Since such additives are not sufficiently adsorbed on the surface of the cross-linked polymer, so that agglomeration between super absorbent polymer particles is not effectively suppressed. Accordingly, when the super absorbent polymer includes the hydrophilic additive as described above instead of the surfactant of Chemical Formula 2, agglomeration between particles after pulverization of the cross-linked polymer is not suppressed, so that the super absorbent polymer contains a large amount of fine powder and exhibits low water retention capacity and low bulk density.

Meanwhile, the surfactant may be used in an amount of 0.01 to 10 parts by weight based on 100 parts by weight of the acrylic acid-based monomer used for cross-linking polymerization to prepare the polymer. When too little surfactant is used, the particles may not be evenly adsorbed on the surface of the polymer, resulting in re-agglomeration of the particles after pulverization, and when too much surfactant is used, the overall physical properties of the final super absorbent polymer may decrease. For example, the surfactant may be used in an amount of 0.01 parts by weight or more, 0.015 parts by weight or more, or 0.1 parts by weight or more, and 5 parts by weight or less, 3 parts by weight or less, 2 parts by weight or less, or 1 part by weight or less based on 100 parts by weight of the acrylic acid-based monomer.

The method of mixing the surfactant with the hydrogel polymer is not particularly limited, and may be appropriately selected as long as it is a method capable of evenly mixing the additive with the hydrogel polymer. Specifically, the surfactant may be dry-mixed, dissolved in a solvent and then mixed in a solution state, or melted and then mixed.

For example, the surfactant may be mixed in the form of a solution dissolved in a solvent. At this time, all kinds of solvents including inorganic solvents and organic solvents may be used without limitation, but water is most appropriate considering the ease of the drying process and the cost of the solvent recovery system. Further, a method of adding the surfactant in the form of a solution and the hydrogel polymer in a reaction tank for mixing, a method of spraying the solution after adding the hydrogel polymer in a mixer, a method of continuously supplying the hydrogel polymer and the solution to a continuously operating mixer for mixing, or the like may be used.

In step 2 of one embodiment of the present disclosure, the hydrogel polymer is micronized in the presence of a second oxidizing agent and a second reducing agent forming a redox couple with each other.

Specifically, the second oxidizing agent and the second reducing agent react with each other to form radicals. The formed radicals react with residual monomers and extractable components that remain unpolymerized in step 1, thereby initiating polymerization and minimizing the content of extractable components and residual monomers.

In one embodiment of the present disclosure, when a persulfate-based initiator is used as the second oxidizing agent, the second reducing agent may be at least one selected from the group consisting of sodium metabisulfite ($Na_2S_2O_5$), tetramethyl ethylenediamine (TMEDA), iron sulfate (II), sodium formaldehyde sulfoxylate, and disodium 2-hydroxy-2-sulfinoacteate.

In one example, potassium persulfate is used as the second oxidizing agent and disodium 2-hydroxy-2-sulfinoacetate is used as the second reducing agent; ammonium persulfate is used as the second oxidizing agent and tetramethylethylenediamine is used as the second reducing agent; or sodium persulfate is used as the second oxidizing agent and sodium formaldehyde sulfoxylate is used as the second reducing agent.

In another embodiment of the present disclosure, when a hydrogen peroxide-based initiator is used as the second oxidizing agent, the second reducing agent may be at least one selected from the group consisting of ascorbic acid, sucrose, sodium sulfite ($Na_2SO_3$), sodium metabisulfite ($Na_2S_2O_5$), tetramethyl ethylenediamine (TMEDA), iron sulfate (II), sodium formaldehyde sulfoxylate, disodium 2-hydroxy-2-sulfinoacteate and disodium 2-hydroxy-2-sulfinoacteate.

For example, hydrogen peroxide may be used as the second oxidizing agent, and ascorbic acid or iron sulfate (II) may be used as the reducing agent.

According to one embodiment of the present disclosure, the micronization may be performed multiple times

using a plurality of micronization devices, or using a single micronization device including a plurality of perforated plates and/or a plurality of cutting knives. Alternatively, some of the plurality of micronization devices may include a plurality of perforated plates and/or a plurality of cutting knives. The micronization may be preferably performed 1 to 6 times or 1 to 4 times.

According to one embodiment of the present disclosure, the step 2 may be performed by including the steps of: primary micronization by mixing the hydrogel polymer and a surfactant (step 2-1); neutralization and secondary micronization by mixing the primary micronized hydrogel polymer with a neutralizing agent (step 2-2); tertiary micronization by mixing a second oxidizing agent and a second reducing agent forming a redox couple with each other with the secondary micronized hydrogel polymer (step 2-3); and quaternary micronization of the tertiary micronized hydrogel polymer without an additive (steps 2-4).

According to another embodiment of the present disclosure, the step 2 may be performed by including the steps of: primary micronization by mixing the hydrogel polymer and a surfactant (step 2-1); neutralization and secondary micronization by mixing the primary micronized hydrogel polymer with a neutralizing agent (step 2-2); tertiary micronization by mixing the secondary micronized hydrogel polymer with a sulfite-based reducing agent (step 2-3); and quaternary micronization by mixing a second oxidizing agent and a second reducing agent forming a redox couple with each other with the tertiary micronized hydrogel polymer (step 2-4).

When the sulfite-based reducing agent is first mixed in step 2-3 before mixing the second oxidizing agent and the second reducing agent forming a redox couple with each other, water retention capacity can be maintained higher. Examples of the sulfite-based reducing agent may include sodium sulfite, sodium metabisulfite, potassium metabisulfite, sodium bisulfite, potassium bisulfite, and sodium hydrosulfite, and sodium sulfite may be preferably used in terms of improving water retention capacity.

According to one embodiment, the primary micronization step by mixing the hydrogel polymer and a surfactant (step 2-1) may be a step of ultrafine pulverization at a rotational speed of 500 rpm to 4,000 rpm. This is a step in which the polymer is not chopped to a size of millimeters, but cut to a size of tens to hundreds of micrometers and agglomerated at the same time. In the above step, since high-intensity mechanical shear force is applied, micropores of 100 μm or less are easily formed in the polymer, thereby increasing the surface roughness. Further, the total surface area of the polymer is significantly increased by the pores formed inside and outside the polymer particles. Since the micropores are formed in a stable form compared to pores formed using a foaming agent in the polymerization step, the generation of fine powder due to the pores in the subsequent process can be significantly reduced. The surface area of the super absorbent polymer particles prepared through this step is greatly increased, so that the absorption rate can be remarkably improved.

The ultrafine pulverization process of step 2-1 may be performed at a rotational speed of 500 rpm to 4,000 rpm. When the rotational speed of the process is less than 500 rpm, it is difficult to expect a fast absorption rate because it is difficult to form sufficient pores, and it is also difficult to secure a desired level of productivity. In addition, when it exceeds 4,000 rpm, the polymer chain may be damaged due to excessive shear force, and accordingly, the content of extractable components increases and thus physical properties of the prepared super absorbent polymer may be slightly deteriorated. Preferably, the ultrafine pulverization process may be performed at 1,000 rpm to 3,500 rpm, or 2,000 rpm to 3,000 rpm. Within this range, it is easy to form the desired micropores without the aforementioned problems.

According to one embodiment of the present disclosure, since the ultrafine pulverization step of step 2-1 is performed by applying high-intensity mechanical shear force, the above step is performed by a high shear pulverizing machine.

The high shear pulverizing machine may include a body including a transfer space in which a polymer is transferred; a screw part rotatably installed inside the transfer space to move the polymer; a driving motor providing rotational driving force to the screw part; a cutter part installed in the body to pulverize the polymer; and a perforated plate having a plurality of holes and capable of discharging the polymer pulverized by the cutter part to the outside of the body.

At this time, the rotational speed of the driving motor of the high shear pulverizing machine is the same as the aforementioned rotational speed of 500 rpm to 4,000 rpm.

In addition, the hole size provided in the perforated plate of the high shear pulverizing machine may be 1 mm to 25 mm, 5 mm to 20 mm, or 5 mm to 15 mm.

When the polymer is ultra-finely pulverized using a high shear pulverizing machine, a smaller particle size distribution is realized, and then the drying and pulverization processes can be performed under milder conditions, thereby preventing the generation of fine particles while forming appropriate micropores on the surface of the polymer to improve the surface area. Thus, the absorption rate is significantly improved.

According to one embodiment, the micronization after the secondary micronization in step 2 may be performed using the same high shear pulverizing machine used in the primary micronization step or a general screw-type extruder.

Meanwhile, the micronization after the secondary micronization may be performed at a rotational speed lower than that of the primary micronization, for example, at 100 rpm to 450 rpm. Preferably, the micronization process after

the secondary micronization may be performed at a rotational speed of 100 rpm to 450 rpm, or 200 rpm to 300 rpm.

In step 2, the hydrogel polymer particles may be micronized to have an average particle diameter of 50 μm to 600 μm, preferably 100 μm to 500 μm, 150 μm to 450 μm, or 200 μm to 400 μm. When satisfying the above particle diameter range, the polymer is prepared as secondary particles in which the primary particles are agglomerated, and then pulverization and drying processes proceed under milder conditions, thereby significantly reducing the amount of fine powder generated during the process.

Herein, the particle diameter "Dn" means a particle diameter at the n% point of the cumulative distribution of the number of particles according to particle diameters. In other words, $D_{50}$ is a particle diameter at the 50% point of the cumulative distribution of the number of particles according to particle diameters, $D_{90}$ is a particle diameter at the 90% point of the cumulative distribution of the number of particles according to particle diameters, and $D_{10}$ is a particle diameter at the 10% point of the cumulative distribution of the number of particles according to particle diameters. The Dn may be measured using a laser diffraction method. Specifically, the powder to be measured is dispersed in the dispersion medium and introduced into a commercially available particle size measuring device (e.g., Microtrac S3500). Then, a particle size distribution is obtained by measuring a difference in diffraction patterns according to particle diameters when the particles pass through the laser beam. In the measuring device, $D_{10}$, $D_{50}$ and $D_{90}$ can be obtained by calculating a particle diameter at a point of reaching 10%, 50% and 90% of the cumulative distribution of the number of particles according to particle diameters.

**(Step 3)**

Next, a step of preparing a base resin by drying the micronized hydrogel polymer is performed.

The drying may be performed so that the moisture content of each of the plurality of micronized hydrogel polymers is about 10 wt% or less, specifically, about 0.1 to about 10 wt%.

The drying step may be performed by a method of fixed-bed type drying, moving type drying, or a combination thereof.

According to one embodiment of the present disclosure, the above step may be performed by fixed-bed type drying.

The fixed-bed type drying refers to a method in which a material to be dried is fixed on a floor such as a porous iron plate through which air can pass, and hot air passes through the material from bottom to top to dry.

Since fixed-bed type drying is dried in a plate shape without particle flow, it is difficult to perform uniform drying simply with a flow of hot air. Therefore, fixed-bed type drying requires delicate control of hot air and temperature to obtain a uniform dried product with a high moisture content. In the present disclosure, the leakage of hot air was prevented by preventing the bending of the plate-shaped dried product during drying through a method of changing the hot air from the bottom to the top. In addition, the drying temperature was changed for each section so that the top, bottom, left, and right layers and the upper, middle, and lower layers inside the dried product could be dried uniformly with a moisture content deviation of less than 5%.

As a device capable of drying by such a fixed-bed type drying manner, a belt type dryer or the like may be used, but is not limited thereto.

The fixed-bed type drying may be performed at a temperature of about 80 °C to 200 °C, preferably at 90 °C to 190 °C, or 100 °C to 180 °C. When the temperature is too low, such as less than 80 °C, the drying time may become excessively long. When the drying temperature is too high, such as more than 200 °C, a super absorbent polymer having a moisture content lower than a desired moisture content may be obtained. Meanwhile, the drying temperature may mean the temperature of the hot air used, or the temperature inside the device during the drying process.

According to one embodiment of the present disclosure, the above step may be performed by moving-type drying.

The moving-type drying refers to a method of drying a material to be dried while mechanically stirring it. At this time, the direction in which hot air passes through the material may be the same as or different from the circulation direction of the material. Alternatively, the material may be circulated inside the dryer, and dried by passing heat transfer fluids through a separate pipe outside the dryer.

As a device capable of drying by such a moving-type drying manner, a horizontal-type mixer, a rotary kiln, a paddle dryer, a steam tube dryer, or a generally used moving-type dryer can be used.

The moving-type drying may be performed at a temperature of about 100 °C to 300 °C, preferably at 120 °C to 280 °C, or 150 °C to 250 °C. When the temperature is too low, such as less than 100 °C, the drying time may become excessively long. When the drying temperature is too high, such as more than 300 °C, the polymer chain of the super absorbent polymer may be damaged, resulting in deterioration of physical properties, and a super absorbent polymer having a moisture content lower than a desired moisture content may be obtained.

**(Step 4)**

Subsequently, a step (step 4) of forming a surface cross-linked layer on at least a part of a surface of the base resin is performed.

The surface cross-linking step is to induce a cross-linking reaction on the surface of the base resin powder in the presence of a surface cross-linking agent, and unsaturated bonds of acrylic acid-based monomers remaining on the surface without cross-linking are cross-linked by the surface cross-linking agent, thereby forming a super absorbent polymer with a high surface cross-linking density.

Specifically, a surface cross-linked layer may be formed by a heat-treatment process in the presence of a surface cross-linking agent. The heat-treatment process increases the surface cross-linking density, that is, the external cross-linking density, but does not change the internal cross-linking density. Accordingly, the prepared super absorbent polymer having the surface cross-linked layer has a structure having higher cross-linking density on the outside than inside.

The surface cross-linking process may be performed at a temperature of about 80 °C to about 250 °C. More specifically, the surface cross-linking process may be performed at a temperature of about 100 °C to about 220 °C, or about 120 °C to about 200 °C for about 20 minutes to about 2 hours, or about 40 minutes to about 80 minutes. When the above-described surface cross-linking process conditions are satisfied, the surface of the super absorbent polymer particles is sufficiently cross-linked to increase absorbency under pressure.

When satisfying these surface cross-linking process conditions (particularly, the temperature elevating condition and the reaction condition at maximum reaction temperature), a super absorbent polymer that appropriately satisfies physical properties such as better absorption rate can be produced.

The heating means for the surface cross-linking reaction is not particularly limited. It is possible to provide a thermal media thereto or provide a heat source directly thereto. At this time, usable thermal media may be a heated fluid such as steam, hot air, hot oil, and the like, but the present invention is not limited thereto. Furthermore, the temperature of the thermal media provided thereto may be properly selected in consideration of the means of the thermal media, heating speed, and target temperature of heating. Meanwhile, an electric heater or a gas heater may be used as the heat source provided directly, but the present disclosure is not limited thereto.

As the surface cross-linking agent included in the surface cross-linking agent composition, any cross-linking agent that has been conventionally used in the preparation of a super absorbent polymer may be used without any particular limitation. Examples of the surface cross-linking agent may include at least one polyol selected from the group consisting of ethylene glycol, propylene glycol, 1,3-propanediol, 1,4-butanediol, 1,6-hexanediol, 1,2-hexanediol, 1,3-hexanediol, 2-methyl-1,3-propanediol, 2,5-hexanediol, 2-methyl-1,3-pentanediol, 2-methyl-2,4-pentanediol, tripropylene glycol and glycerol; at least one carbonate-based compound selected from the group consisting of ethylene carbonate, and propylene carbonate; an epoxy compound such as ethylene glycol diglycidyl ether; an oxazoline compound such as oxazolidinone; a polyamine compound; an oxazoline compound; a mono-, di- or poly-oxazolidinone compound; a cyclic urea compound; and the like. Preferably, the surface cross-linking agent may be the same as the internal cross-linking agent. For example, a diglycidyl ether-based compound of alkylene glycol such as ethylene glycol diglycidyl ether may be used.

In the surface cross-linking step, a surface cross-linking agent composition containing an alcohol-based solvent and water in addition to the surface cross-linking agent may be used.

The surface cross-linking agent may be used in an amount of 0.001 to 2 parts by weight based on 100 parts by weight of the super absorbent polymer particles. Preferably, it may be used in an amount of 0.005 parts by weight or more, 0.01 parts by weight or more, or 0.02 parts by weight or more, and 0.5 parts by weight or less, or 0.3 parts by weight or less. When adjusting the content range of the surface cross-linking agent within the above-described range, a super absorbent polymer exhibiting various physical properties such as excellent absorption performance and permeability can be prepared.

Meanwhile, the surface cross-linking agent is added to the super absorbent polymer particles in the form of a surface cross-linking agent composition containing the same, and the method of adding the surface cross-linking agent composition is not particularly limited. For example, a method of adding the surface cross-linking agent composition and the super absorbent polymer particles in a reactor for mixing, a method of spraying the surface cross-linking agent composition onto the super absorbent polymer particles, or a method of mixing the super absorbent polymer particles and the surface cross-linking agent composition while continuously providing them to a continuously operating mixer may be used.

In addition, the surface cross-linking agent composition may further include water and/or a hydrophilic organic solvent as a medium. With this, there is an advantage that the surface cross-linking agent may be evenly dispersed on the based resin. At this time, amounts of water and a hydrophilic organic solvent to be added based on 100 parts by weight of the super absorbent polymer particles may be properly controlled for the purposes of inducing a uniform dissolution/dispersion of the surface cross-linking agent, preventing an agglomeration phenomenon of the base resin,

and optimizing a surface penetration depth of the surface cross-linking agent.

Meanwhile, in the preparation method for a super absorbent polymer according to one embodiment of the present disclosure, aluminum salts such as aluminum sulfate salts and other various polyvalent metal salts may be further used during surface cross-linking to further improve permeability. Such a polyvalent metal salt may be included on the surface cross-linked layer of the finally prepared super absorbent polymer.

Meanwhile, the preparation method for a super absorbent polymer according to one embodiment of the present disclosure may further include a step of pulverizing and classifying the base resin, if necessary, before the surface cross-linking step.

Specifically, the pulverizing step may be performed to have a normal particle diameter, that is, a particle diameter of 150 μm to 850 μm by pulverizing the dried base resin.

The pulverizing machine used for this purpose may be a vertical pulverizer, a turbo cutter, a turbo grinder, a rotary cutter mill, a cutter mill, a disc mill, a shred crusher, a crusher, a chopper or a disc cutter, but the present disclosure is not limited thereto.

Alternatively, a pin mill, a hammer mill, a screw mill, a roll mill, a disc mill, or a jog mill may be used as the pulverizing machine, but the present disclosure is not limited thereto.

According to one embodiment of the present disclosure, after forming a surface cross-linked layer on at least a part of the surface of the super absorbent polymer particles, at least one step of a cooling step of cooling the super absorbent polymer particles on which the surface cross-linked layer is formed, a hydration step of adding water to the super absorbent polymer particles on which the surface cross-linked layer is formed, and a post-treatment step of adding an additive to the super absorbent polymer particles on which the surface cross-linked layer is formed may be further performed. At this time, the cooling step, hydration step, and post-treatment step may be performed sequentially or simultaneously.

The additive added in the post-treatment step may include permeability enhancers, anti-caking agents, fluidity enhancers, antioxidants, and the like, but the present disclosure is not limited thereto.

When optionally performing the cooling step, hydration step, and post-treatment step, the moisture content of the final super absorbent polymer can be improved and a high quality super absorbent polymer product can be manufactured.

Meanwhile, in the micronization step of the preparation method of the present disclosure, super absorbent polymer particles having a smaller particle size distribution than in the conventional chopping step can be provided, so that a super absorbent polymer having a very high content of normal particles, which has a particle diameter of 150 μm to 850 μm, can be formed, thereby greatly reducing the generation rate of fine powder.

The super absorbent polymer particles prepared as described above may include 80 wt% or more, 85 wt% or more, 89 wt% or more, 90 wt% or more, 92 wt% or more, 93 wt% or more, 94 wt% or more, or 95 wt% or more of super absorbent polymer particles having a particle diameter of 150 μm to 850 μm, which are normal particles, based on the total weight. The particle diameter of these polymer particles may be measured according to EDANA (European Disposables and Nonwovens Association) WSP 220.3.

In addition, the super absorbent polymer particles may include less than about 20 wt%, less than about 18 wt%, less than about 15 wt%, less than about 13 wt%, less than about 10 wt%, specifically less than about 5 wt%, more specifically less than about 3 wt% of fine powder having a particle diameter of less than 150 μm based on the total weight. This is in contrast to the super absorbent polymer prepared according to a conventional preparation method, which has greater than about 20 wt% to about 30 wt% of fine powder.

The super absorbent polymer prepared by the above method may have a high absorption rate and a low fine powder content, and may have centrifugal retention capacity (CRC) and absorption under pressure (AUP) equal to or higher than those of the super absorbent polymer prepared by the conventional method.

For example, the super absorbent polymer of the present disclosure may have centrifugal retention capacity (CRC) of about 30 g/g or more, about 32 g/g or more, about 34 g/g or more, about 35 g/g or more, about 36 g/g or more, or about 37 g/g or more, and about 50 g/g or less, about 45 g/g or less, or about 40 g/g or less as measured according to EDANA WSP 241.3.

In addition, the super absorbent polymer of the present disclosure may have absorption under pressure (AUP) at 0.3 psi of about 25 g/g or more, about 27 g/g or more, about 28 g/g or more, about 29 g/g or more, about 30 g/g or more, or about 31 g/g or more, and about 40 g/g or less, about 36 g/g or less, or about 35 g/g or less as measured according to EDANA WSP 242.3.

In addition, the super absorbent polymer of the present disclosure may have a vortex time (absorption rate) of 25 seconds or less, 24 seconds or less, 23 seconds or less, 22 seconds or less, 21 seconds or less, 20 seconds or less, 19 seconds or less, 18 seconds or less, 17 seconds or less, or 16 seconds or less. As the lower vortex time can be evaluated as the better, the lower limit is theoretically 0 seconds, but may be about 5 seconds or more, about 10 seconds or more, or about 12 seconds or more.

The vortex time refers to the time required (unit: second) for the vortex of the liquid to disappear due to the

rapid absorption when the super absorbent polymer is added to physiological saline and then stirred. It can be seen that the shorter the time, the faster the initial absorption rate of the super absorbent polymer.

In addition, the super absorbent polymer of the present disclosure may have an extractable (water-soluble component) content (E/C) of 5 wt% or less, 4.5 wt% or less, 4.0 wt% or less, 3.5 wt% or less, 3.3 wt% or less, 3.0 wt% or less, 2.8 wt% or less, or 2.7 wt% or less, as measured after swelling for 1 hour according to EDANA WSP 270.3. As the lower extractable content can be evaluated as the better, the lower limit is theoretically 0 wt%, but may be 0.1 wt% or more, or 1 wt% or more.

In addition, the super absorbent polymer of the present disclosure may have a residual monomer content (R/M) of 1500 ppm or less, 1300 ppm or less, 1000 ppm or less, 900 ppm or less, 800 ppm or less, 700 ppm or less, 600 ppm or less, or 500 ppm or less, as measured according to EDANA WSP 210.2. As the lower residual monomer content can be evaluated as the better, the lower limit is theoretically 0 ppm, but may be 50 ppm or more, or 100 ppm or more.

In addition, the super absorbent polymer of the present disclosure may have tap water free absorbency of 120 g or more, 130 g or more, 140 g or more, 150 g or more, 160 g or more, 170 g or more, or 180 g or more, and 250 g or less, 240 g or less, 230 g or less, 220 g or less, 210 g or less, or 200 g or less. The method for measuring the tap water free absorbency will be described in more detail in the following examples.

Further, the super absorbent polymer prepared by the preparation method of the present disclosure satisfies at least one, preferably at least two, more preferably all of centrifugal retention capacity (CRC), absorption under pressure (AUP) at 0.3 psi, absorption rate (vortex time), tap water free absorbency, extractable content, and residual monomer content as mentioned above.

Hereinafter, the present invention will be described in more detail with the following preferred examples, but these examples are provided for illustrative purposes only. It is apparent to those skilled in the art that various changes and modifications can be made within the scope and spirit of the present invention. Therefore, it is obvious that the changes and modifications are within the scope of the present invention.

<Examples>

**Example 1**

(Step 1)

In a 2L glass container, 100 parts by weight of acrylic acid, 0.25 parts by weight of pentaerythritol triallyl ether (PETTAE) as an internal cross-linking agent, and 226 parts by weight of water were mixed while stirring. At this time, 1000 cc/min of nitrogen was added to the mixture for 1 hour while maintaining the reaction temperature at 5 °C. 1.3 parts by weight of 0.3% hydrogen peroxide aqueous solution, 1.5 parts by weight of 1% ascorbic acid aqueous solution, and 3.0 parts by weight of 2% 2,2'-azobisamidinopropane dihydrochloride aqueous solution were added thereto, at the same time as adding and mixing 1.5 parts by weight of 0.01% iron sulfate aqueous solution. After the polymerization reaction started in the mixture and the temperature of the polymer reached 85 °C, polymerization was performed in an oven at 90±2 °C for about 6 hours to prepare a hydrogel polymer. The moisture content of the polymer was about 70 wt%.

(Step 2)

Glycerol monolaurate (GML) was dissolved in water at 80 °C, and added to 1000 g of the obtained hydrogel polymer in the form of an aqueous solution in an amount of 0.01 part by weight based on 100 parts by weight of the hydrogel polymer.

Thereafter, using a high-speed rotary blade cutter (F-150/ manufactured by Karl Schnell) installed in the cylindrical pulverizing machine, it was pushed into a perforated plate having a plurality of 10 mm holes at a rotational speed of 2500 rpm.

The collected hydrogel was pushed into a perforated plate having a plurality of 6 mm holes three times at a rotational speed of 250 rpm using a screw-type extruder installed in the cylindrical pulverizing machine. In the first pass, 400 g of 32 wt% NaOH aqueous solution was added, and in the second pass, 21.41 g of 0.5 wt% sodium peroxydisulfate (SPS) aqueous solution and 21.41 g of 0.5 wt% sodium metabisulfite (SMBS) aqueous solution were added. In the third pass, it was passed without adding any additives.

(Step 3)

The obtained micronized hydrogel polymer was dried in a dryer capable of changing wind direction up and down. Specifically, the hydrogel polymer was uniformly dried by flowing hot air at 100 to 135 °C from the top to the bottom for 15 minutes, and then flowing from the bottom to the top for 15 minutes, so that the moisture content was

about 10% or less. The dried polymer was pulverized with a roll mill, and then classified using an ASTM standard mesh to obtain a base resin having a particle diameter of 150 to 850 μm.

(Step 4)

A surface cross-linking solution prepared by adding 4 g of water, 6 g of methanol, 0.05 g of ethylene glycol diglycidyl ether (EJ-1030S), 0.1 g of propylene glycol, and 0.2 g of aluminum sulfate was added to 100 g of the base resin, and mixed for 1 minute. Then, a surface cross-linking reaction was performed at 140 °C for 50 minutes to obtain a surface cross-linked super absorbent polymer.

## Example 2

A super absorbent polymer was prepared in the same manner as in Example 1, except that 10.71 g of 0.5 wt% sodium peroxydisulfate aqueous solution and 21.41 g of 0.5 wt% sodium metabisulfite aqueous solution were used instead of 21.41 g of 0.5 wt% sodium peroxydisulfate aqueous solution and 21.41 g of 0.5 wt% sodium metabisulfite aqueous solution in the second pass of the screw extruder in step 2 of Example 1.

## Example 3

A super absorbent polymer was prepared in the same manner as in Example 1, except that 6.42 g of 0.5 wt% sodium peroxydisulfate aqueous solution and 21.41 g of 0.5 wt% sodium metabisulfite aqueous solution were used instead of 21.41 g of 0.5 wt% sodium peroxydisulfate aqueous solution and 21.41 g of 0.5 wt% sodium metabisulfite aqueous solution in the second pass of the screw extruder in step 2 of Example 1.

## Example 4

A super absorbent polymer was prepared in the same manner as in Example 1, except that 14.97 g of 10.0 wt% sodium sulfite aqueous solution was added instead of 21.41 g of 0.5 wt% sodium peroxydisulfate aqueous solution and 21.41 g of 0.5 wt% sodium metabisulfite aqueous solution in the second pass and 10.71 g of 0.5 wt% sodium peroxydisulfate aqueous solution and 21.41 g of 0.5 wt% sodium metabisulfite aqueous solution were used in the third pass of the screw extruder in step 2 of Example 1.

## Example 5

A super absorbent polymer was prepared in the same manner as in Example 1, except that 7.49 g of 10.0 wt% sodium sulfite aqueous solution was added instead of 21.41 g of 0.5 wt% sodium peroxydisulfate aqueous solution and 21.41 g of 0.5 wt% sodium metabisulfite aqueous solution in the second pass and 10.71 g of 0.5 wt% sodium peroxydisulfate aqueous solution and 21.41 g of 0.5 wt% sodium metabisulfite aqueous solution were used in the third pass of the screw extruder in step 2 of Example 1.

## Comparative Example 1

A super absorbent polymer was prepared in the same manner as in Example 1, except that sodium peroxydisulfate aqueous solution and sodium metabisulfite aqueous solution were not added in the second pass of the screw extruder in step 2 of Example 1.

## Comparative Example 2

A super absorbent polymer was prepared in the same manner as in Example 1, except that 7.49 g of 10.0 wt% sodium sulfite aqueous solution was added instead of 21.41 g of 0.5 wt% sodium peroxydisulfate aqueous solution and 21.41 g of 0.5 wt% sodium metabisulfite aqueous solution in the second pass of the screw extruder in step 2 of Example 1.

**<Experimental Examples>**

The physical properties of the base resin (abbreviation: BR) or surface cross-linked final super absorbent polymer (abbreviation: PD) prepared in Examples and Comparative Examples were evaluated in the following manner and are listed in Table 1 below.

Unless otherwise indicated, all procedures were conducted in a constant temperature and humidity room (23±1

°C, relative humidity of 50±10%), and physiological saline or saline means a 0.9 wt% sodium chloride (NaCl) aqueous solution.

In addition, tap water used in the physical property evaluation has an electrical conductivity of 170 to 180 μS/cm when measured using Orion Star A222 (Company: Thermo Scientific).

Unless otherwise indicated, physical properties of the base resin were evaluated for resins with a particle diameter of 300 μm to 600 μm classified with an ASTM standard mesh, and physical properties of the final surface cross-linked super absorbent polymer were evaluated for polymers with a particle diameter of 150 μm to 850 μm classified with an ASTM standard mesh.

(1) Centrifugal retention capacity (CRC)

The centrifugal retention capacity by absorption ratio under a non-loading condition of the super absorbent polymer prepared in Examples and Comparative Examples was measured in accordance with EDANA (European Disposables and Nonwovens Association) WSP 241.3.

Specifically, after inserting $W_0$ (g, about 0.2 g) of the super absorbent polymer prepared in one of Examples and Comparative Examples uniformly in a nonwoven fabric envelope and sealing the same, it was soaked in physiological saline (0.9 wt% sodium chloride aqueous solution) at room temperature. After 30 minutes, the envelope was centrifuged at 250G for 3 minutes to drain, and the mass $W_2$ (g) of the envelope was measured. Further, after carrying out the same operation without using the polymer, the mass $W_1$ (g) of the envelope was measured.

Then, CRC (g/g) was calculated using the obtained mass values according to the following Equation 2.

[Equation 2]

$$CRC\ (g/g) = \{[W_2(g) - W_1(g)]/W_0(g)\} - 1$$

(2) Absorption under pressure at 0.3 psi (0.3 AUP)

The absorption under pressure at 0.3 psi of the super absorbent polymer prepared in Examples and Comparative Examples was measured in accordance with EDANA WSP 242.3.

Specifically, a 400 mesh stainless steel screen was installed in a cylindrical bottom of a plastic having an inner diameter of 25 mm. $W_0$ (g, 0.9 g) of the super absorbent polymer was uniformly scattered on the screen at room temperature and a humidity of 50%. Thereafter, a piston which can uniformly provide a load of 0.3 psi was placed thereon. Herein, the outer diameter of the piston was slightly smaller than 25 mm, there was no gap with the inner wall of the cylinder, and jig-jog of the cylinder was not interrupted. At this time, the weight $W_3$ (g) of the device was measured.

Subsequently, a glass filter having a diameter of 90 mm and a thickness of 5 mm was placed in a petri dish having a diameter of 150 mm, and saline (0.9 wt% sodium chloride) was poured in the dish. At this time, the saline was poured until the surface level of the saline became equal to the upper surface of the glass filter. One sheet of filter paper with a diameter of 90 mm was placed thereon. After the measuring device was placed on the filter paper, the liquid was absorbed for 1 hour under a load. After 1 hour, the measuring device was lifted, and the weight $W_4$ (g) was measured.

Then, absorption under pressure (g/g) was calculated by using the obtained mass values according to the following Equation 3.

[Equation 3]

$$AUP(g/g) = [W_4(g) - W_3(g)]/W_0(g)$$

The measurement was repeated 5 times, and the average value and standard deviation were obtained.

(3) Vortex time (absorption rate, sec)

The vortex time was measured according to the Japanese standard method (JIS K 7224).

Specifically, 50 mL of saline (0.9 wt% sodium chloride aqueous solution) at 24 °C and a magnetic bar (8 mm in diameter, 31.8 mm in length) were put into a 100 ml beaker, and stirred at 600 rpm. 2.0 g of a super absorbent polymer was added to the stirring saline, and the time taken until the vortex disappeared was measured in seconds to calculate the vortex time.

(4) Extractable content (E/C)

The extractable content of the super absorbent polymer was measured after swelling for 1 hour in accordance with EDANA WSP 270.3.

(5) Residual monomer content (R/M)

The residual monomer content of the super absorbent polymer was measured after swelling for 1 hour in accordance with EDANA WSP 210.2. Specifically, 1.0 g of the super absorbent polymer and 200 g of saline (0.9 wt% sodium chloride aqueous solution) were put in a 250 ml flask beaker, and a magnetic bar was placed thereinto, followed by stirring at 500 rpm for 60 minutes. After 60 minutes, the solution in the flask was passed through a 0.45 μm syringe filter, and the residual monomer content was measured by HPLC.

(6) TWFA (Tap Water Free Absorbency)

1.0 g ($W_5$) of the super absorbent polymer prepared in one of Examples and Comparative Examples was placed in a nonwoven fabric bag (15 cm × 15 cm) and immersed in 1000 mL of 24 °C tap water for 1 minute. After 1 minute, the bag was taken out of the tap water, hung, and left for 1 minute. Then, the mass ($W_6$) of the bag was measured. In addition, after carrying out the same operation without using the super absorbent polymer, the mass $W_7$ (g) of the bag was measured.

Then, TWFA was calculated using the obtained mass values according to the following Equation 5.

[Equation 5]

$$TWFA = \{[W_7(g) - W_6(g) - W_5(g)]/W_5(g)\}$$

[Table 1]

| | Base resin | | | | Super absorbent polymer after surface cross-linking | | | | | |
|---|---|---|---|---|---|---|---|---|---|---|
| | CRC (g/g) | E/C (%) | Vortex (s) | R/M (ppm) | CRC (g/g | 0.3AUP (g/g) | Vortex (s) | TWFA (g/g) | E/C (%) | R/M (ppm) |
| Example 1 | 43.1 | 5.4 | 24 | 489 | 35.8 | 31.7 | 15 | 185 | 3.1 | 485 |
| Example 2 | 44.6 | 5.7 | 26 | 762 | 36.2 | 30.7 | 16 | 183 | 2.6 | 757 |
| Example 3 | 45.0 | 6.3 | 25 | 1234 | 35.5 | 30.8 | 17 | 181 | 2.3 | 1228 |
| Example 4 | 48.2 | 8.8 | 27 | 650 | 37.6 | 33.5 | 18 | 182 | 2.8 | 639 |
| Example 5 | 46.5 | 8.2 | 25 | 698 | 37.1 | 34.1 | 18 | 180 | 2.7 | 687 |
| Comparative Example 1 | 48.9 | 9.3 | 15 | 3831 | 37.7 | 31.5 | 19 | 167 | 4.1 | 3820 |
| Comparative Example 2 | 49.7 | 8.7 | 28 | 1650 | 37.8 | 31.0 | 19 | 166 | 4.4 | 1644 |

Referring to Table 1, Examples 1 to 5 showed excellent absorption performance and absorption rate while exhibiting very low extractable content and residual monomer content by adding a surfactant in the pulverization process and introducing a radical reaction system using an oxidizing agent and a reducing agent forming a redox couple.

**Claims**

**1.** A preparation method for a super absorbent polymer comprising the steps of:

forming a hydrogel polymer by cross-linking polymerization of an acrylic acid-based monomer having an acidic group in the presence of an internal cross-linking agent, a polymerization initiator, a first oxidizing agent and a

first reducing agent forming a redox couple with each other (step 1);
micronizing the hydrogel polymer in the presence of a neutralizing agent, a surfactant, a second oxidizing agent and a second reducing agent forming a redox couple with each other (step 2);
drying the micronized hydrogel polymer to prepare a base resin (step 3); and
forming a surface cross-linked layer on at least a part of a surface of the base resin (step 4).

**2.** The preparation method for a super absorbent polymer of Claim 1,

wherein the first and second oxidizing agents are each independently a persulfate-based oxidizing agent, and the first and second reducing agents are each independently at least one selected from the group consisting of sodium metabisulfite ($Na_2S_2O_5$), tetramethyl ethylenediamine (TMEDA), iron sulfate (II), sodium formaldehyde sulfoxylate, and disodium 2-hydroxy-2-sulfinoacteate.

**3.** The preparation method for a super absorbent polymer of Claim 1,

wherein the first and second oxidizing agents are each independently a hydrogen peroxide-based oxidizing agent, and
the first and second reducing agents are each independently at least one selected from the group consisting of ascorbic acid, sucrose, sodium sulfite ($Na_2SO_3$), sodium metabisulfite ($Na_2S_2O_5$), tetramethyl ethylenediamine (TMEDA), iron sulfate (II), sodium formaldehyde sulfoxylate, disodium 2-hydroxy-2-sulfinoacteate, and disodium 2-hydroxy-2-sulfinoacteate.

**4.** The preparation method for a super absorbent polymer of Claim 1,

wherein the surfactant includes a compound represented by the following Chemical Formula 2, or a salt thereof:

[Chemical Formula 2]

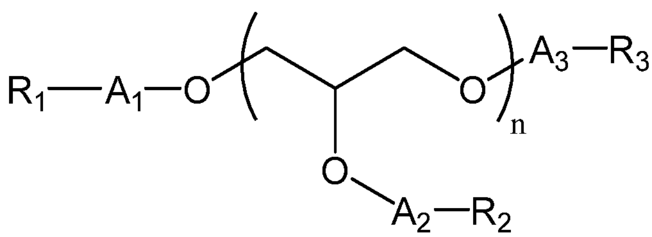

in Chemical Formula 2,

$A_1$, $A_2$ and $A_3$ are each independently a single bond, carbonyl,

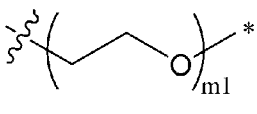 , 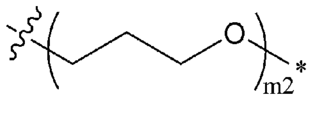 , or 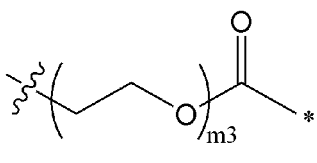 ,

provided that at least one of these is carbonyl, or

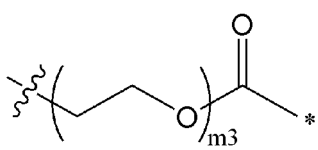 ,

wherein m1, m2 and m3 are each independently an integer of 1 to 8, each

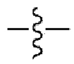

is connected to an adjacent oxygen atom, and

——*

is connected to adjacent $R_1$, $R_2$ and $R_3$, respectively,
$R_1$, $R_2$ and $R_3$ are each independently hydrogen, C6 to C18 linear or branched alkyl or C6 to C18 linear or branched alkenyl, and
n is an integer of 1 to 9.

**5.** The preparation method for a super absorbent polymer of Claim 4,
wherein the compound represented by Chemical Formula 2 is selected from compounds represented by the following Chemical Formulae 2-1 to 2-14:

[Chemical Formula 2-1]

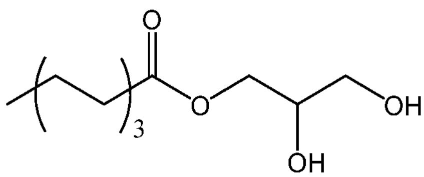

[Chemical Formula 2-2]

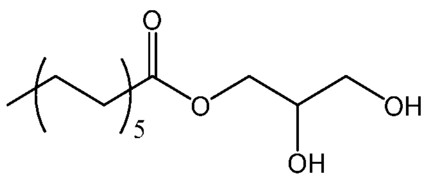

[Chemical Formula 2-3]

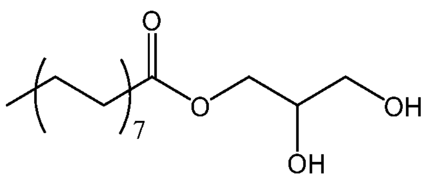

[Chemical Formula 2-4]

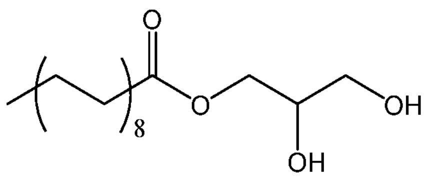

[Chemical Formula 2-5]

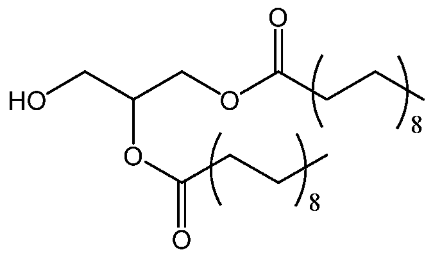

[Chemical Formula 2-6]

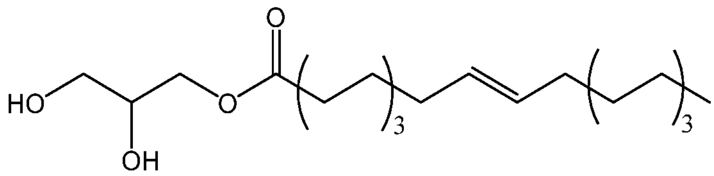

[Chemical Formula 2-7]

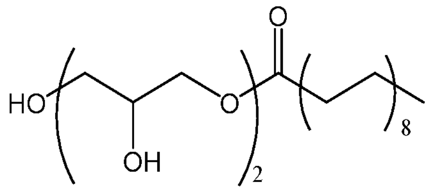

[Chemical Formula 2-8]

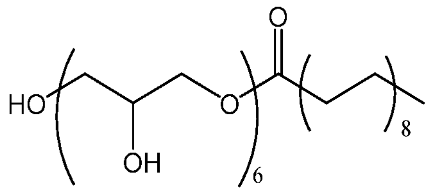

[Chemical Formula 2-9]

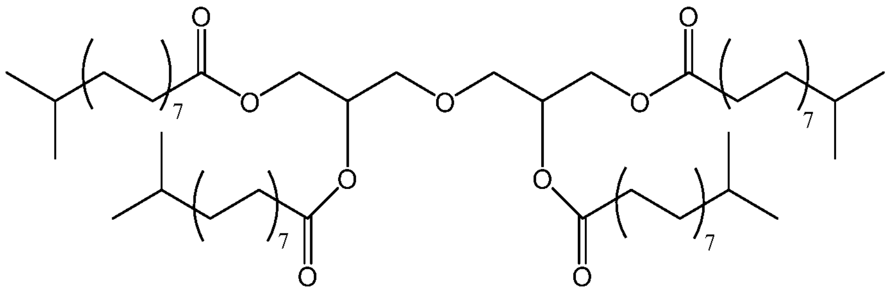

[Chemical Formula 2-10]

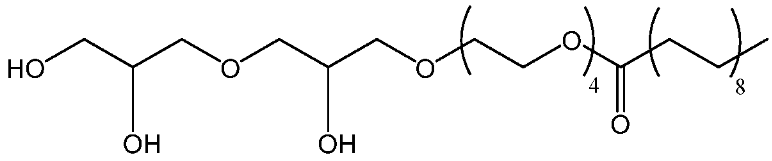

[Chemical Formula 2-11]

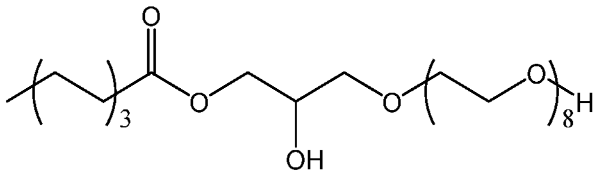

[Chemical Formula 2-12]

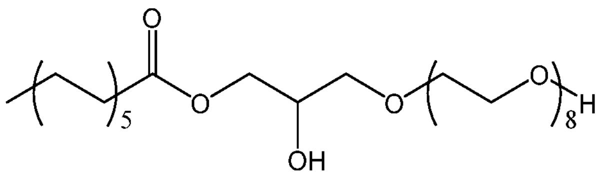

[Chemical Formula 2-13]

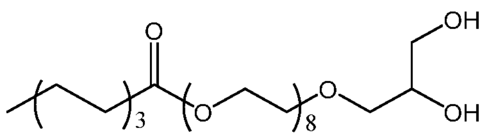

[Chemical Formula 2-14]

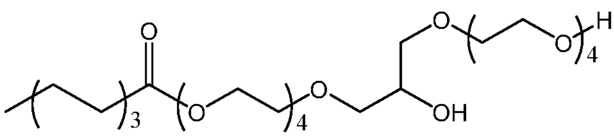

.

**6.** The preparation method for a super absorbent polymer of Claim 1,
wherein the micronization step is performed by a high shear pulverizing machine having a rotation speed of 500 rpm to 4,000 rpm.

**7.** The preparation method for a super absorbent polymer of Claim 1,

wherein the step 2 comprises
primary micronization step by mixing the hydrogel polymer and a surfactant (step 2-1);
neutralization and secondary micronization step by mixing the primary micronized hydrogel polymer with a neutralizing agent (step 2-2);
tertiary micronization step by mixing a second oxidizing agent and a second reducing agent forming a redox couple with each other with the secondary micronized hydrogel polymer (step 2-3); and
quaternary micronization step of the tertiary micronized hydrogel polymer without an additive (steps 2-4).

**8.** The preparation method for a super absorbent polymer of Claim 1,

wherein the step 2 comprises
primary micronization step by mixing the hydrogel polymer and a surfactant (step 2-1);
neutralization and secondary micronization step by mixing the primary micronized hydrogel polymer with a neutralizing agent (step 2-2);
tertiary micronization step by mixing the secondary micronized hydrogel polymer with a sulfite-based reducing agent (step 2-3); and
quaternary micronization step by mixing a second oxidizing agent and a second reducing agent forming a redox couple with each other with the tertiary micronized hydrogel polymer (step 2-4).

**9.** The preparation method for a super absorbent polymer of Claim 1,
wherein the super absorbent polymer has centrifugal retention capacity (CRC) measured according to EDANA WSP 241.3 of 30 g/g or more and 50 g/g or less.

**10.** The preparation method for a super absorbent polymer of Claim 1,
wherein the super absorbent polymer has absorption under pressure (AUP) at 0.3 psi measured according to EDANA WSP 242.3 of 25 g/g or more and 40 g/g or less.

**11.** The preparation method for a super absorbent polymer of Claim 1,
wherein the super absorbent polymer has a vortex time of 25 seconds or less.

**12.** The preparation method for a super absorbent polymer of Claim 1,
wherein the super absorbent polymer has an extractable content measured after swelling for 1 hour according to EDANA WSP 270.3 of 5 wt% or less.

**13.** The preparation method for a super absorbent polymer of Claim 1,
wherein the super absorbent polymer has a residual monomer content (R/M) measured according to EDANA WSP 210.2 of 1500 ppm or less.

【FIG. 1】

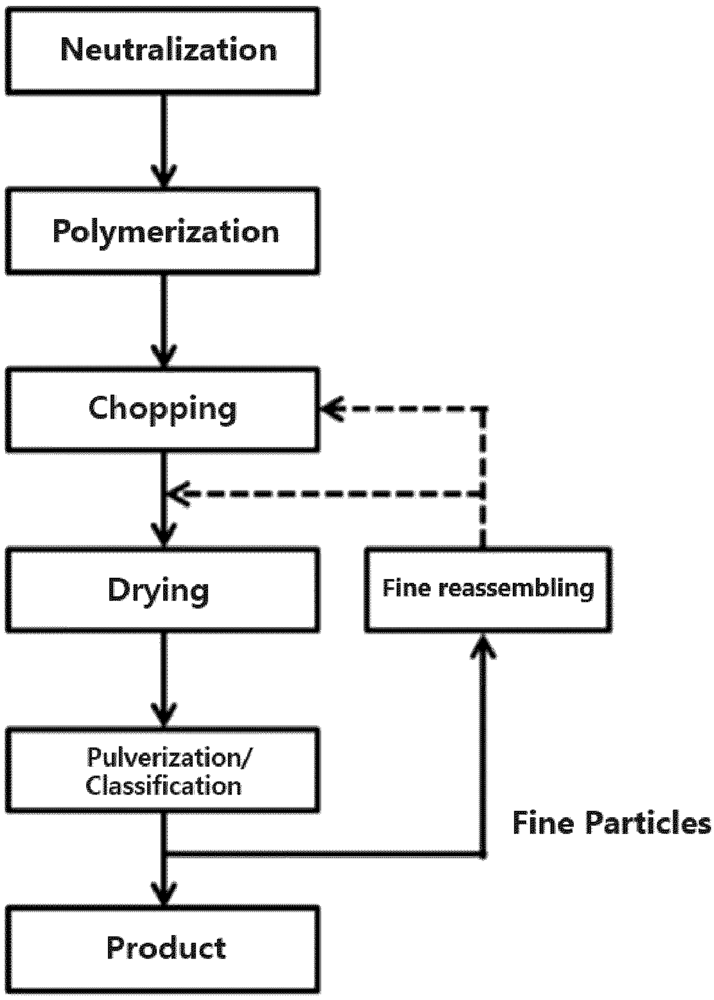
Neutralization
Polymerization
Chopping
Drying
Fine reassembling
Pulverization/
Classification
Fine Particles
Product

## INTERNATIONAL SEARCH REPORT

International application No.
**PCT/KR2023/010216**

**A. CLASSIFICATION OF SUBJECT MATTER**

**C08J 3/24**(2006.01)i; **C08J 3/12**(2006.01)i; **C08J 3/075**(2006.01)i; **C08F 4/40**(2006.01)i; **C08F 20/06**(2006.01)i

According to International Patent Classification (IPC) or to both national classification and IPC

**B. FIELDS SEARCHED**

Minimum documentation searched (classification system followed by classification symbols)

C08J 3/24(2006.01); C08F 2/38(2006.01); C08F 2/50(2006.01); C08F 6/24(2006.01); C08J 7/16(2006.01); C08K 3/00(2006.01); C08K 3/013(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 고흡수성 수지 (superabsorbent resin), 레독스 커플 (redox couple), 중화제 (neutralizer), 계면활성제 (surfactant)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2022-0103062 A (LG CHEM, LTD.) 21 July 2022 (2022-07-21)<br>See claims 1 and 9; and paragraphs [0010], [0021], [0055], [0064], [0066], [0067], [0096], [0100]-[0109], [0158] and [0185]. | 1-13 |
| Y | KR 10-2017-0132799 A (NIPPON SHOKUBAI CO., LTD.) 04 December 2017 (2017-12-04)<br>See claims 1, 6 and 8; and paragraphs [0143], [0144], [0251], [0264] and [0581]. | 1-13 |
| Y | KR 10-2020-0055648 A (LG CHEM, LTD.) 21 May 2020 (2020-05-21)<br>See paragraphs [0094], [0100] and [0101]. | 4,5 |
| A | JP 07-292142 A (NIPPON SHOKUBAI CO., LTD.) 07 November 1995 (1995-11-07)<br>See entire document. | 1-13 |
| A | KR 10-2014-0012124 A (SUMITOMO SEIKA CHEMICALS CO., LTD.) 29 January 2014 (2014-01-29)<br>See entire document. | 1-13 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 November 2023** | **06 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/010216**

| Patent document cited in search report | Publication date (day/month/year) | Patent family member(s) | Publication date (day/month/year) |
|---|---|---|---|
| KR 10-2022-0103062 A | 21 July 2022 | CN 115413287 A | 29 November 2022 |
| | | EP 4112677 A1 | 04 January 2023 |
| | | JP 2023-523615 A | 06 June 2023 |
| | | US 2023-0149897 A1 | 18 May 2023 |
| | | WO 2022-154566 A1 | 21 July 2022 |
| KR 10-2017-0132799 A | 04 December 2017 | CN 107428949 A | 01 December 2017 |
| | | CN 107428949 B | 17 March 2020 |
| | | CN 111269440 A | 12 June 2020 |
| | | CN 111269440 B | 16 June 2023 |
| | | EP 3279238 A1 | 07 February 2018 |
| | | EP 3279238 A4 | 05 December 2018 |
| | | EP 3279238 B1 | 14 July 2021 |
| | | JP 2018-158975 A1 | 22 February 2018 |
| | | JP 6457067 B2 | 23 January 2019 |
| | | KR 10-2512769 B1 | 23 March 2023 |
| | | US 10603653 B2 | 31 March 2020 |
| | | US 11020726 B2 | 01 June 2021 |
| | | US 2018-0185820 A1 | 05 July 2018 |
| | | US 2020-0122120 A1 | 23 April 2020 |
| | | WO 2016-158975 A1 | 06 October 2016 |
| KR 10-2020-0055648 A | 21 May 2020 | CN 111436201 A | 21 July 2020 |
| | | CN 111436201 B | 24 March 2023 |
| | | EP 3680277 A1 | 15 July 2020 |
| | | EP 3680277 A4 | 06 January 2021 |
| | | JP 2021-510741 A | 30 April 2021 |
| | | JP 6973874 B2 | 01 December 2021 |
| | | KR 10-2418591 B1 | 07 July 2022 |
| | | US 11466131 B2 | 11 October 2022 |
| | | US 2021-0147640 A1 | 20 May 2021 |
| | | WO 2020-101167 A1 | 22 May 2020 |
| JP 07-292142 A | 07 November 1995 | None | |
| KR 10-2014-0012124 A | 29 January 2014 | AR 085561 A1 | 09 October 2013 |
| | | BR 112013019831 A2 | 17 November 2020 |
| | | BR 112013019831 B1 | 17 August 2021 |
| | | CN 103429625 A | 04 December 2013 |
| | | EP 2692744 A1 | 05 February 2014 |
| | | EP 2692744 A4 | 05 November 2014 |
| | | EP 2692744 B1 | 23 August 2017 |
| | | JP 5823497 B2 | 25 November 2015 |
| | | KR 10-1872052 B1 | 27 June 2018 |
| | | SA 112330383 B1 | 19 April 2015 |
| | | SG 193238 A1 | 30 October 2013 |
| | | TW 201245235 A | 16 November 2012 |
| | | TW I535737 B | 01 June 2016 |
| | | US 2013-0324396 A1 | 05 December 2013 |
| | | US 9221030 B2 | 29 December 2015 |
| | | WO 2012-132861 A1 | 04 October 2012 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220177312

### Non-patent literature cited in the description

- UV Coatings: Basics, Recent Developments and New Application. Elsevier, 2007
- **ODIAN.** Principle of Polymerization. Wiley, 1981, 203